# EUROPÄISCHE PATENTSCHRIFT

(11) **EP 4 096 089 B1**
(45) Veröffentlichungstag und Bekanntmachung des Hinweises auf die Patenterteilung: **01.01.2025**
(21) Anmeldenummer: 22175531.7
(22) Anmeldetag: 25.05.2022
(51) Int. Cl.: H02S 20/32, H02S 40/22

(54) **SOLARMODULHALTEVORRICHTUNG**
SOLAR MODULE HOLDING DEVICE
DISPOSITIF DE SUPPORT DE MODULE SOLAIRE

(30) Priorität: 28.05.2021 DE 102021113859; 26.07.2021 DE 102021119330
(43) Veröffentlichungstag der Anmeldung: 30.11.2022
(73) Patentinhaber: Zimmermann, Robert, 88436 Eberhardzell (DE)
(72) Erfinder: Zimmermann, Robert, 88436 Eberhardzell (DE)
(74) Vertreter: Daub, Thomas

(56) Entgegenhaltungen:
- WO-A1-2020/006575
- JP-A- S57 162 912

## Beschreibung

### Stand der Technik

Die Erfindung betrifft eine Solarmodulhaltevorrichtung zu einem Aufstellen von bifazialen Solarmodulen, ein Abdeckelement für die Solarmodulhaltevorrichtung, eine Solarmodulvorrichtung mit der Solarmodulhaltevorrichtung und ein Verfahren zur Herstellung des Abdeckelements.

Es sind bereits in dem Dokument WO2020006575 A1, Solarmodulhaltevorrichtungen zu einem Aufstellen von bifazialen Solarmodulen, mit zumindest einer Trägereinheit, wobei die Trägereinheit zumindest einen Trägerschaft umfasst, der dazu vorgesehen ist, zumindest ein auf einer gedachten Montageebene angeordnetes bifaziales Solarmodul zu tragen, wobei der Trägerschaft zumindest im Wesentlichen parallel zur Montageebene angeordnet ist, und mit zumindest einer Reflektionseinheit zu einer Reflektion von einfallendem Licht auf eine dem Trägerschaft zugewandte Seite eines über den Trägerschaft auf der gedachten Montageebene getragenen bifazialen Solarmoduls, vorgeschlagen worden.

Die Aufgabe der Erfindung besteht insbesondere darin, eine gattungsgemäße Vorrichtung mit verbesserten Eigenschaften hinsichtlich geringer Herstellungskosten, einer vorteilhaft hohen Modularität sowie einer hohen Robustheit und Langlebigkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Solarmodulhaltevorrichtung gemäß dem Anspruch 1, zu einem Aufstellen von bifazialen Solarmodulen, mit zumindest einer Trägereinheit, wobei die Trägereinheit zumindest einen Trägerschaft umfasst, der dazu vorgesehen ist, zumindest ein auf einer gedachten Montageebene angeordnetes bifaziales Solarmodul zu tragen, wobei der Trägerschaft zumindest im Wesentlichen parallel zur Montageebene angeordnet ist, und mit zumindest einer Reflektionseinheit zu einer Reflektion von einfallendem Licht auf eine dem Trägerschaft zugewandte Seite eines über den Trägerschaft auf der gedachten Montageebene getragenen bifazialen Solarmoduls.

Es wird vorgeschlagen, dass die Reflektionseinheit zumindest ein Abdeckelement umfasst, welches zumindest eine Reflektionsfläche aufweist und getrennt von dem Trägerschaft ausgebildet ist, wobei das Abdeckelement dazu vorgesehen ist, in einem Nahbereich des Trägerschafts befestigt zu werden, wobei das Abdeckelement dazu vorgesehen ist, in zumindest einem montierten Zustand des Abdeckelements zumindest eine Außenfläche des Trägerschafts zu verdecken.

Die Solarmodulhaltevorrichtung ist dazu vorgesehen, bifaziale Solarmodule in einem bestimmten Winkel und mit einer bestimmten Ausrichtung relativ zu einem Untergrund aufzustellen. Es ist denkbar, dass der Trägerschaft um eine Achse rotierbar ausgebildet ist, wobei insbesondere die Solarmodule über den Trägerschaft um die Achse drehbar ausgebildet sind. Unter "vorgesehen" soll insbesondere speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Vorzugsweise umfasst die Solarmodulhaltevorrichtung, insbesondere die Trägereinheit, zumindest eine Stütze, die dazu vorgesehen ist, den Trägerschaft beabstandet von dem Untergrund anzuordnen. Vorzugsweise ist der Trägerschaft dazu vorgesehen, schräg oder zumindest im Wesentlichen parallel zu dem Untergrund und/oder einer Horizontalen angeordnet zu werden. Unter "im Wesentlichen parallel" soll insbesondere eine Ausrichtung einer Geraden, einer Ebene oder einer Richtung, insbesondere einer eine Längsachse des Trägerschafts umfassenden Geraden, relativ zu einer anderen Geraden, einer anderen Ebene oder einer Bezugsrichtung, insbesondere einer von dem Untergrund aufgespannten Ebene und/oder der Horizontalen, verstanden werden, wobei die Gerade, die Ebene oder die Richtung gegenüber der anderen Geraden, der anderen Ebene oder der Bezugsrichtung, insbesondere innerhalb zumindest einer Projektionsebene betrachtet, eine Abweichung von insbesondere kleiner als 8°, vorteilhaft kleiner als 5° und besonders vorteilhaft kleiner als 2°, aufweist. Vorzugsweise ist die Solarmodulhaltevorrichtung dazu vorgesehen, die aufzustellenden Solarmodule auf der gedachten Montageebene anzuordnen, wobei die Solarmodule vorzugsweise direkt oder über Befestigungsmittel der Trägereinheit an dem Trägerschaft befestigt sind. Bevorzugt ist die Montageebene zumindest im Wesentlichen parallel zur Längsachse des Trägerschafts angeordnet.

Der Trägerschaft weist vorzugsweise eine stabförmige Grundform auf. Es ist denkbar, dass der Trägerschaft zumindest im Wesentlichen senkrecht zur Längsachse des Trägerschafts eine im Wesentlichen runde, insbesondere kreisrunde oder ellipsenförmige, oder eine eckige, insbesondere viereckige oder sechseckige, Querschnittsfläche aufweist. Unter "im Wesentlichen senkrecht" soll insbesondere eine Ausrichtung einer Geraden, einer Ebene oder einer Richtung relativ zu einer anderen Geraden, einer anderen Ebene oder einer Bezugsrichtung verstanden werden, wobei die Gerade, die Ebene oder die Richtung und die andere Gerade, die andere Ebene oder die Bezugsrichtung, insbesondere in einer Projektionsebene betrachtet, einen Winkel von 90° mit einer maximalen Abweichung von insbesondere kleiner als 8°, vorteilhaft kleiner als 5° und besonders vorteilhaft kleiner als 2°, aufweist. Insbesondere sind Ecken einer eckigen Querschnittfläche abgerundet oder mit einer Fase ausgebildet. Vorzugsweise ist der Trägerschaft zumindest abschnittsweise hohl ausgebildet. Bevorzugt ist der Trägerschaft aus einem Metall, beispielsweise Stahlblech, Aluminium o.dgl., ausgebildet. Bifaziale Solarmodule sind insbesondere dazu vorgesehen, über zwei Seitenflächen der Solarmodule einfallendes Licht zur Energiegewinnung zu nutzen. Insbesondere sind die zwei Seitenflächen von über die Solarmodulhaltevorrichtung aufgestellten bifazialen Solarmodulen zumindest im Wesentlichen parallel zur Montageebene ausgerichtet. Bevorzugt ist jeweils eine Seitenfläche von über die Solarmodulhaltevorrichtung aufgestellten bifazialen Solarmodulen dem Trägerschaft und/oder der Reflektionseinheit, insbesondere dem Abdeckelement, zugewandt.

Vorzugsweise ist die Solarmodulhaltevorrichtung derart ausgebildet, dass über die Solarmodulhaltevorrichtung aufgestellte bifaziale Solarmodule und/oder Solarzellen eines über die Solarmodulhaltevorrichtung aufgestellten bifazialen Solarmoduls zumindest einen Spalt begrenzen, welcher sich zumindest im Wesentlichen parallel zu der Längsachse des Trägerschafts erstreckt. Der zumindest eine Spalt erstreckt sich vorzugsweise in bzw. an der Montageebene. Der zumindest eine Spalt weist eine Haupterstreckung auf, die sich insbesondere zumindest im Wesentlichen parallel zur Längsachse des Trägerschafts erstreckt. Bevorzugterweise spannt eine die Längsachse des Trägerschafts umfassende und sich durch den Spalt erstreckende gedachte Ebene mit der Montageebene einen Winkel von zumindest im Wesentlichen 90° auf, wobei insbesondere der Winkel eine maximale Abweichung von höchstens 8°, vorzugsweise höchstens 5° und bevorzugt höchstens 3°, aufweist. Bevorzugterweise umfasst die die Längsachse des Trägerschafts umfassende und sich durch den Spalt erstreckende gedachte Ebene die Haupterstreckung des Spalts und/oder ist parallel zu der Haupterstreckung des Spalts ausgerichtet. Vorzugsweise ist der zumindest eine Spalt dazu vorgesehen, insbesondere zumindest im Wesentlichen senkrecht zur Montageebene einfallendes, Licht durch die Montageebene hindurch auf die Reflektionseinheit, insbesondere das Abdeckelement, zu lassen. Es ist denkbar, dass der Spalt durch separat ausgebildete Solarmodule gebildet ist oder durch ein Solarmodul durch einen lichtdurchlässigen Bereich zwischen Solarzellen des Solarmoduls gebildet ist, wobei insbesondere keine Durchführung für feste Körper innerhalb des Solarmoduls ausgebildet wird.

Bevorzugt ist die Reflektionseinheit durch das zumindest eine Abdeckelement ausgebildet. Es ist denkbar, dass die Reflektionseinheit eine Mehrzahl von Abdeckelementen aufweist, welche entlang des Trägerschafts betrachtet hintereinander angeordnet sind. Das zumindest eine Abdeckelement ist insbesondere einteilig ausgebildet. Das Abdeckelement ist dazu vorgesehen an der Trägereinheit, insbesondere dem Trägerschaft, angeordnet, insbesondere befestigt, zu werden. Unter einem "Nahbereich des Trägerschafts" soll insbesondere ein Bereich verstanden werden, welcher sich innerhalb eines minimalen Abstands von höchstens 30 cm, vorzugsweise höchstens 20 cm und bevorzugt höchstens 10 cm, um den Trägerschaft erstreckt. Besonders bevorzugt ist das Abdeckelement dazu vorgesehen, direkt an dem Trägerschaft befestigt zu werden. Alternativ ist denkbar, dass das Abdeckelement dazu vorgesehen ist, an Befestigungselementen der Trägereinheit, welche insbesondere zu einem Befestigen von Solarmodulen an dem Trägerschaft vorgesehen sind, oder an einem anderen Bauteil der Trägereinheit befestigt zu werden. Insbesondere ist das Abdeckelement in dem montierten Zustand in dem Nahbereich des Trägerschafts, insbesondere an der Trägereinheit bzw. dem Trägerschaft, befestigt. Bevorzugt ist die durch das Abdeckelement zu verdeckende/verdeckte Außenfläche des Trägerschafts an einer der Montageebene und/oder einem über die Trägereinheit gehaltenen Solarmodul zugewandten Außenseite des Trägerschafts angeordnet. Die zumindest eine Reflektionsfläche des Abdeckelements ist dazu vorgesehen, insbesondere zwischen Solarmodulen bzw. durch den Spalt zwischen Solarmodulen, einfallendes Licht auf die dem Trägerschaft zugewandte Seite eines über den Trägerschaft auf der gedachten Montageebene getragenen bifazialen Solarmoduls zu reflektieren. Darunter, dass "das Abdeckelement getrennt von dem Trägerschaft ausgebildet ist" soll insbesondere verstanden werden, dass das Abdeckelement und der Trägerschaft als zwei separate Bauteile ausgebildet sind und vorzugsweise nicht einteilig ausgebildet sind.

Vorzugsweise ist das Abdeckelement dazu vorgesehen, senkrecht zu der Längsachse bzw. einer Mittelachse des Trägerschafts betrachtet, bevorzugt senkrecht zur Montageebene von der Montageebene aus betrachtet, mindestens 50 %, vorzugsweise mindestens 60 % und bevorzugt mindestens 65 %, einer sichtbaren Oberfläche des Trägerschafts zu verdecken. Bevorzugt weist das Abdeckelement eine maximale Quererstreckung auf, die sich insbesondere senkrecht zu einer Längsachse des Abdeckelements erstreckt, wobei die maximale Quererstreckung des Abdeckelements mindestens 50 %, vorzugsweise mindestens 60 % und bevorzugt mindestens 65 %, einer maximalen Quererstreckung des Trägerschafts entspricht, die sich insbesondere senkrecht zur Längsachse des Trägerschafts und/oder parallel zur maximalen Quererstreckung des Abdeckelements erstreckt. Insbesondere beträgt die maximale Quererstreckung des Abdeckelements, die sich insbesondere senkrecht zur Längsachse des Abdeckelements erstreckt, mindestens 5 cm, vorzugsweise mindestens 10 cm und bevorzugt mindestens 12 cm.

Durch die erfindungsgemäße Ausgestaltung der Solarmodulhaltevorrichtung kann eine vorteilhaft hohe Modularität erreicht werden, insbesondere da die Reflektionseinheit vorteilhaft unabhängig von einer Ausgestaltung des Trägerschafts montiert und/oder demontiert werden kann. Es können vorteilhaft geringe Herstellungskosten erreicht werden, insbesondere da eine Ausgestaltung des Trägerschafts für Vorrichtungen mit und ohne Reflektionseinheit beibehalten werden kann. Es kann eine vorteilhaft einfache und schnelle Montage der Solarmodulhaltevorrichtung ermöglicht werden, insbesondere gegenüber einer einteiligen Ausgestaltung des Trägerschafts und der Reflektionseinheit, vorzugsweise da bei einer Montage des Trägerschafts nicht auf einen Schutz von Reflektionsflächen geachtet werden muss. Die Montage der Reflektionseinheit kann vorteilhaft nach einer Montage des Trägerschafts und/oder nach einer Montage der Solarmodule erfolgen. Durch eine Anordnung der Reflektionseinheit im Nahbereich des Trägerschafts bzw. am Trägerschaft kann eine vorteilhaft kompakte Ausgestaltung der Solarmodulhaltevorrichtung erreicht werden.

Des Weiteren wird vorgeschlagen, dass das Abdeckelement dazu vorgesehen ist, in dem montierten Zustand zumindest teilweise flächig an dem Trägerschaft angelegt zu werden. Es kann eine vorteilhaft kompakte Ausgestaltung ermöglicht werden. Es kann ein Ablagern bzw. Hängenbleiben von Fremdkörpern an der Solarmodulhaltevorrichtung, insbesondere zwischen dem Trägerschaft und dem Abdeckelement vorteilhafterweise verhindert werden. Es kann ein vorteilhaft fluiddichter Übergang zwischen dem Abdeckelement und dem Trägerschaft ermöglicht werden. Bevorzugt bildet das Abdeckelement zumindest einen Befestigungsbereich aus, wobei das Abdeckelement dazu vorgesehen ist, über den Befestigungsbereich an dem Trägerschaft angelegt zu werden. Der zumindest eine Befestigungsbereich ist bevorzugt an einer der Reflektionsfläche abgewandten Seite des Abdeckelements angeordnet. Vorzugsweise bildet das Abdeckelement zwei Befestigungsbereiche aus, welche entlang der Längsachse des Abdeckelements betrachtet an zwei voneinander abgewandten Enden des Abdeckelements angeordnet sind. Vorzugsweise ist das Abdeckelement zumindest im Wesentlichen länglich ausgebildet. Unter "im Wesentlichen länglich" soll insbesondere ein Bauteil, insbesondere das Abdeckelement, verstanden werden, dessen maximale Längserstreckung mindestens das 4-fache, vorzugsweise mindestens das 6-fache und bevorzugt mindestens das 8-fache, einer senkrecht zur maximalen Längserstreckung ausgerichteten maximalen Quererstreckung des Bauteils entspricht. Insbesondere erstreckt sich die Längsachse des Abdeckelements parallel zur maximalen Längserstreckung des Abdeckelements. Insbesondere beträgt die maximale Längserstreckung des Abdeckelements mindestens 20 cm, vorzugsweise mindestens 30 cm und bevorzugt mindestens 40 cm. Vorzugsweise ist die maximale Längserstreckung des Abdeckelements in Abhängigkeit von einem frei von Befestigungselementen ausgebildeten Bereich des Trägerschafts gewählt. Bevorzugt sind die Befestigungsbereiche durch zwei einander zumindest teilweise zugewandte Anlegeflächen des Abdeckelements ausgebildet. Bevorzugt sind/ist die die/den Befestigungsbereich(e) ausbildende(n) Anlegefläche(n) des Abdeckelements zumindest im Wesentlichen eben ausgebildet. Unter "im Wesentlichen eben" soll insbesondere eine Fläche, insbesondere die Innenfläche(n), verstanden werden, die sich, insbesondere unter Berücksichtigung von durch ein Verfahren zur Herstellung der Fläche bzw. eines die Fläche aufweisenden Bauteils bedingte Fertigungstoleranzen, zu mindestens 95 %, vorzugsweise mindestens 97 % und bevorzugt mindestens 99 %, innerhalb einer Ebene erstreckt. Bevorzugt ist das Abdeckelement dazu vorgesehen, über die Anlegefläche(n) flächig an dem Trägerschaft angelegt zu werden.

Zudem wird vorgeschlagen, dass das Abdeckelement dazu vorgesehen ist, in dem montierten Zustand zusammen mit dem Trägerschaft zumindest eine Durchführung zu begrenzen. Es kann eine vorteilhaft hohe Funktionalität des Abdeckelements erreicht werden. Es kann eine vorteilhaft gute Wärmeabfuhr ermöglicht werden, vorzugsweise getrennt von durch den Trägerschaft geführten bzw. im Trägerschaft angeordneten Bauteilen der Solarmodulhaltevorrichtung. Bevorzugt ist die Durchführung durch eine Innenseite des Abdeckelements und eine/die Außenfläche des Trägerschafts begrenzt. Vorzugsweise erstreckt sich die Durchführung zumindest im Wesentlichen parallel zur Längsachse des Abdeckelements und/oder des Trägerschafts. Bevorzugt ist die Durchführung in zumindest einer senkrecht zur Längsachse des Abdeckelements und/oder des Trägerschafts ausgerichteten Schnittebene betrachtet zumindest im Wesentlichen vollständig geschlossen ausgebildet. Vorzugsweise erstreckt sich die Durchführung zumindest im Wesentlichen vollständig über eine maximale Längserstreckung des Abdeckelements. Bevorzugt ist die Durchführung entlang einer maximalen Längserstreckung der Durchführung und/oder entlang der maximalen Längserstreckung des Abdeckelements, insbesondere jeweils entlang der Längserstreckung betrachtet, zumindest im Wesentlichen vollständig geschlossen ausgebildet. Alternativ ist denkbar, dass das Abdeckelement Ausnehmungen begrenzt, welche Öffnungen zu der Durchführung ausbilden. Alternativ oder zusätzlich ist denkbar, dass das Abdeckelement dazu vorgesehen ist, die Durchführung entlang der maximalen Längserstreckung des Abdeckelements und/oder der Durchführung, insbesondere an einer Unterseite der Durchführung, zumindest teilweise offen auszubilden.

Ferner wird vorgeschlagen, dass das Abdeckelement dazu vorgesehen ist, an dem Trägerschaft verlaufende Kabel, welche insbesondere zu einem Anschluss von zumindest einem bifazialen Solarmodul vorgesehen sind, über die Durchführung zumindest teilweise aufzunehmen. Es kann eine vorteilhaft einfache und schnelle Montage der Solarmodulhaltevorrichtung ermöglicht werden, insbesondere da die Kabel außerhalb des Trägerschafts geschützt geführt werden können. Es kann, insbesondere gleichzeitig zu einer Führung der Kabel außerhalb des Trägerschafts, ein vorteilhaft hoher Schutz der Kabel ermöglicht werden. Bevorzugt ist das Abdeckelement dazu vorgesehen, die Kabel über die maximale Längserstreckung des Abdeckelements aufzunehmen, wobei insbesondere die Kabel über die maximale Längserstreckung des Abdeckelements innerhalb der Durchführung angeordnet sind.

Des Weiteren wird vorgeschlagen, dass die Reflektionseinheit, insbesondere das Abdeckelement, und/oder der Trägerschaft zumindest ein Haltemittel aufweist/aufweisen, welches dazu vorgesehen ist, Kabel innerhalb der Durchführung zu fixieren. Es kann eine vorteilhafte Anordnung der Kabel relativ zu einer die Durchführung begrenzenden Innenfläche des Abdeckelements und/oder relativ zu einer die Durchführung begrenzenden Außenfläche des Trägerschafts sichergestellt werden. Es kann vorteilhaft einfach eine Beabstandung der Kabel von dem sich erwärmenden Abdeckelement erreicht werden. Es kann eine vorteilhaft einfache und schnelle Montage der Solarmodulhaltevorrichtung ermöglicht werden, insbesondere da die Kabel vor einer Montage des Abdeckelements fixiert werden können. Insbesondere falls die Reflektionseinheit das zumindest eine Haltemittel aufweist, ist das zumindest eine Haltemittel vorzugsweise einteilig mit dem Abdeckelement ausgebildet und/oder stoffschlüssig mit dem Abdeckelement verbunden. Es ist denkbar, dass das zumindest eine Haltemittel an dem Trägerschaft oder dem Abdeckelement angeordnet ist. Beispielsweise ist das zumindest eine Haltemittel als eine Lasche, als ein Haken, als ein Klettverbindungselement, als eine Klammer, als ein Clip o.dgl. ausgebildet. Vorzugsweise sind/ist die/das Kabel werkzeuglos über das zumindest eine Haltemittel fixierbar und/oder lösbar. Es ist denkbar, dass die Reflektionseinheit, insbesondere das Abdeckelement, und/oder der Trägerschaft eine Mehrzahl von Haltemitteln aufweist/aufweisen. Insbesondere sind die Haltemittel entlang der Längserstreckung des Abdeckelements und/oder der Durchführung verteilt angeordnet. Alternativ oder zusätzlich ist denkbar, dass zumindest zwei Haltemittel entlang der Längserstreckung des Abdeckelements und/oder der Durchführung betrachtet nebeneinander angeordnet sind. Es ist denkbar, dass sowohl die Reflektionseinheit, insbesondere das Abdeckelement, als auch der Trägerschaft Haltemittel aufweisen. Alternativ ist denkbar, dass die Solarmodulhaltevorrichtung, insbesondere die Reflektionseinheit, das Abdeckelement und/oder der Trägerschaft, keine Haltemittel umfasst, wobei insbesondere die Kabel lose geführt werden. Insbesondere weist das Abdeckelement an einer die Durchführung begrenzenden Innenfläche keine Fortsätze o.dgl. auf.

Zudem wird vorgeschlagen, dass das Abdeckelement an zumindest einem entlang einer maximalen Längserstreckung und/oder der Längsachse des Abdeckelements ausgebildeten Ende des Abdeckelements zumindest eine abgerundete und/oder umgebogene Kante aufweist. Es kann vorteilhaft eine Führung der Kabel aus der Durchführung heraus oder in die Durchführung über das Abdeckelement erreicht werden. Es kann eine ungewollte Beschädigung der Kabel an einer Kante des, insbesondere aus einem Metall ausgebildeten, Abdeckelements vorteilhaft verhindert werden. Es kann eine vorteilhaft einfache und sichere Montage der Solarmodulhaltevorrichtung erreicht werden. Insbesondere kann ein vorteilhaft einfaches und schnelles Durchziehen von Kabeln durch die von dem Abdeckelement begrenzte Durchführung ermöglicht werden, insbesondere auch nach einer Montage des Abdeckelements. Zusätzliche Schutzelemente o.dgl. zu einem Schutz der Kabel können vorteilhaft entfallen. Dadurch können vorteilhaft geringe Herstellungskosten ermöglicht werden. Bevorzugt erstreckt sich die abgerundete und/oder umgebogene Kante des Abdeckelements zumindest größtenteils, insbesondere zumindest im Wesentlichen vollständig, über eine maximale Quererstreckung der/einer die Durchführung begrenzenden Innenfläche des Abdeckelements, welche insbesondere zumindest im Wesentlichen senkrecht zur Längsachse des Abdeckelements ausgerichtet ist. Bevorzugt weist das Abdeckelement an zwei entlang einer maximalen Längserstreckung und/oder der Längsachse des Abdeckelements ausgebildeten Enden des Abdeckelements jeweils zumindest eine abgerundete und/oder umgebogene Kante auf.

Ferner wird vorgeschlagen, dass die Trägereinheit zumindest zwei Befestigungselemente zu einem Befestigen zumindest eines bifazialen Solarmoduls an dem Trägerschaft umfasst, wobei die zwei Befestigungselemente dazu vorgesehen sind, entlang des Trägerschafts beabstandet voneinander angeordnet zu werden und gemeinsam zumindest ein bifaziales Solarmodul an dem Trägerschaft zu befestigen, wobei das zumindest eine Abdeckelement eine, insbesondere die vorher genannte, maximale Längserstreckung aufweist, welche mindestens 50 %, vorzugsweise mindestens 70% und bevorzugt mindestens 80 %, eines minimalen Abstands der zwei Befestigungselemente entspricht. Es kann ein vorteilhaft hoher Anteil einer durch die Solarmodule dringenden Strahlung über die Reflektionseinheit auf die Rückseite der Solarmodule reflektiert werden. Vorzugsweise können die Kabel über eine Distanz zwischen den Solarmodulen im Wesentlichen vollständig durch das Abdeckelement geschützt werden. Insbesondere erstreckt sich der minimale Abstand der zwei Befestigungselemente zumindest im Wesentlichen parallel zur Längsachse des Trägerschafts und/oder des Abdeckelements. Es ist denkbar, dass die Trägereinheit eine Vielzahl von Befestigungselementen umfasst, die insbesondere entlang der Längsachse des Trägerschafts betrachtet hintereinander am Trägerschaft angeordnet sind. Vorzugsweise ist jeweils zwischen zwei der Befestigungselemente jeweils zumindest ein Abdeckelement angeordnet. Alternativ oder zusätzlich ist denkbar, dass die Reflektionseinheit eine Mehrzahl von Abdeckelementen umfasst, die zwischen den zwei bzw. zwei der Befestigungselemente angeordnet sind. Vorzugsweise beträgt eine gemeinsame maximale Längserstreckung der Mehrzahl von Abdeckelementen, die insbesondere zwischen den zwei bzw. zwei der Befestigungselemente angeordnet sind, mindestens 50 %, vorzugsweise mindestens 70% und bevorzugt mindestens 80 %, des minimalen Abstands der zwei Befestigungselemente.

Des Weiteren wird vorgeschlagen, dass das Abdeckelement zumindest zwei Reflektionsflächen aufweist, wobei Haupterstreckungsebenen der zwei Reflektionsflächen in einem Winkel von mindestens 45°, vorzugsweise mindestens 60° und bevorzugt mindestens 70°, zueinander angeordnet sind. Es kann ein vorteilhaft hoher Anteil einer durch die Solarmodule dringenden Strahlung über die an dem Trägerschaft angeordnete Reflektionseinheit auf die Rückseite der Solarmodule reflektiert werden. Vorzugsweise erstreckt sich der Winkel zumindest im Wesentlichen senkrecht zur Längsachse des Abdeckelements. Bevorzugt erstrecken sich die zwei Reflektionsebenen jeweils zumindest im Wesentlichen vollständig über die maximale Längserstreckung des Abdeckelements. Unter einer "Haupterstreckungsebene" einer Baueinheit, insbesondere der einzelnen Reflektionsflächen, soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft.

Zudem wird vorgeschlagen, dass das Abdeckelement zumindest zwei zumindest im Wesentlichen ebene Reflektionsflächen, insbesondere die zwei vorher genannten Reflektionsflächen, aufweist, welche geneigt zueinander angeordnet sind. Es kann eine vorteilhaft einfache und kostengünstige Ausgestaltung des Abdeckelements ermöglicht werden. Es kann eine vorteilhaft einfache Behandlung bzw. Herstellung der Reflektionsflächen ermöglicht werden, insbesondere um gleichzeitig eine vorteilhaft hohe Reflektivität zu erreichen. Alternativ ist denkbar, dass das Abdeckelement lediglich eine gebogene Reflektionsfläche ausbildet. Insbesondere bildet das Abdeckelement zwischen den zwei Reflektionsflächen zumindest einen Zwischenbereich aus, welcher gebogen, als eine Fase oder als eine Kante ausgebildet ist. Bevorzugt sind die zwei Reflektionsflächen über den Zwischenbereich aneinander angeordnet.

Ferner wird vorgeschlagen, dass sich das Abdeckelement in dem montierten Zustand entlang einer Haupterstreckungsachse des Trägerschafts betrachtet um mindestens 40°, vorzugsweise mindestens 50° und bevorzugt mindestens 60°, um die Haupterstreckungsachse des Trägerschafts erstreckt. Es kann ein vorteilhaft hoher Anteil einer durch die Solarmodule dringenden Strahlung über die an dem Trägerschaft angeordnete Reflektionseinheit auf die Rückseite der Solarmodule reflektiert werden. Es kann eine vorteilhaft große Durchführung ermöglicht werden. Unter einer "Haupterstreckungsachse" eines Objekts, insbesondere des Trägerschafts, soll insbesondere eine Achse verstanden werden, welche parallel zu einer längsten Kante eines kleinsten geometrischen Quaders verläuft, welcher das Objekt gerade noch vollständig umschließt. Vorzugsweise weist das Abdeckelement entlang der Längsachse des Abdeckelements betrachtet eine zumindest im Wesentlichen gleichbleibende, insbesondere sich senkrecht zur Längsachse erstreckende, maximale Quererstreckung auf.

Des Weiteren wird vorgeschlagen, dass die Solarmodulhaltevorrichtung zumindest ein Befestigungsmittel zu einer Befestigung des Abdeckelements an dem Trägerschaft umfasst, wobei das zumindest eine Befestigungsmittel zu einer Rastverbindung vorgesehen ist. Es kann eine vorteilhaft werkzeuglose Montage, Demontage und Wartung der Reflektionseinheit, insbesondere des Abdeckelements, ermöglicht werden. Es kann eine vorteilhaft einfache und schnelle Montage, Demontage und Wartung der Reflektionseinheit, insbesondere des Abdeckelements, ermöglicht werden. Dadurch können vorteilhaft geringe Montage- und/oder Wartungskosten erreicht werden. Beispielsweise ist das zumindest eine Befestigungsmittel als eine Klammer ausgebildet. Vorzugsweise begrenzen das Abdeckelement und der Trägerschaft jeweils zumindest eine Ausnehmung zu einer Befestigung durch das Befestigungsmittel. Bevorzugt ist das zumindest eine Befestigungsmittel dazu vorgesehen, zur Befestigung des Abdeckelements durch zumindest eine Ausnehmung des Trägerschafts und/oder des Abdeckelements hindurch geführt zu werden. Vorzugsweise ist das zumindest eine Befestigungsmittel dazu vorgesehen, das Abdeckelement durch ein Verklemmen des Befestigungsmittels an dem Trägerschaft zu befestigen. Alternativ oder zusätzlich ist denkbar, dass die Solarmodulhaltevorrichtung zumindest ein Befestigungsmittel bzw. eine Mehrzahl an Befestigungsmitteln zu einer Befestigung des Abdeckelements an dem Trägerschaft umfasst, wobei insbesondere das/die Befestigungsmittel jeweils verschieden von einem Rastelement ausgebildet sind/ist. Beispielsweise sind/ist die/das Befestigungsmittel zu einer Schraub- und/oder Pressverbindung vorgesehen. Beispielsweise sind/ist die/das Befestigungsmittel als Schrauben, Nieten o.dgl. ausgebildet. Alternativ oder zusätzlich ist denkbar, dass das/die Befestigungsmittel an dem Abdeckelement oder dem Trägerschaft befestigt, stoffschlüssig mit diesem verbunden und/oder einteilig mit diesem ausgebildet ist/sind. Beispielsweise begrenzt der Trägerschaft eine Mehrzahl von Ausnehmungen, wobei das Abdeckelement eine Mehrzahl von Befestigungsmittel ausbildet, welche dazu vorgesehen sind, zu einer Montage des Abdeckelements an dem Trägerschaft durch die Ausnehmungen des Trägerschafts gedrückt zu werden.

Zudem wird vorgeschlagen, dass die Solarmodulhaltevorrichtung zumindest ein, insbesondere das vorher genannte, Befestigungsmittel zu einer Befestigung des Abdeckelements an dem Trägerschaft umfasst, wobei das zumindest eine Befestigungsmittel dazu vorgesehen ist, zu einem Befestigen des Abdeckelements am Trägerschaft außerhalb der Durchführung angeordnet zu werden. Innerhalb der Durchführung angeordnete Bauteile und/oder Kabel können bei einer Montage des Abdeckelements vorteilhaft gut geschützt werden. Es kann eine vorteilhaft fluiddichte Ausgestaltung der Durchführung erreicht werden. Es kann ein ungewolltes Eindringen von Fremdkörpern und/oder Wasser in die Durchführung schräg zu einer Längserstreckung der Durchführung vorteilhaft verhindert werden, insbesondere da Befestigungspunkte, welche möglicherweise Lücken aufweisen, beabstandet von der Durchführung angeordnet sind. Bevorzugt sind die von dem Abdeckelement begrenzten Ausnehmungen und/oder das/die Befestigungsmittel innerhalb des/der Befestigungsbereich(e) des Abdeckelements angeordnet. Bevorzugt sind die von dem Abdeckelement begrenzten Ausnehmungen und/oder das/die Befestigungsmittel beabstandet von der Durchführung bzw. von der die Durchführung begrenzenden Innenfläche des Abdeckelements angeordnet. Bevorzugt sind/ist die von dem Trägerschaft begrenzte(n) Ausnehmung(en) beabstandet von der Durchführung bzw. der die Durchführung begrenzenden Außenseite des Trägerschafts angeordnet.

Des Weiteren wird vorgeschlagen, dass die Solarmodulhaltevorrichtung zumindest ein Befestigungsmittel zu einer Befestigung des Abdeckelements an dem Trägerschaft mittels einer Klemm- und/oder Rastverbindung umfasst, wobei das Befestigungsmittel dazu vorgesehen ist, den Trägerschaft zur Befestigung des Abdeckelements entlang einer, insbesondere der vorher genannten, Längsachse des Trägerschafts betrachtet um die Längsachse zumindest größtenteils zu umschließen. Es kann eine vorteilhaft geringe Anzahl an Befestigungsmitteln zur Befestigung des Abdeckelements an dem Trägerschaft erreicht werden. Dadurch können vorteilhaft geringe Herstellungskosten sowie eine vorteilhaft schnelle Montage, Wartung und/oder Demontage des Abdeckelements erreicht werden. Es kann eine vorteilhaft einfache und kostengünstige Ausgestaltung des Abdeckelements und des Trägerschafts ermöglicht werden, vorzugsweise ohne Ausnehmungen und/oder Durchführungen für Befestigungsmittel. Vorzugsweise ist das Befestigungsmittel dazu vorgesehen, insbesondere zu einem Befestigen des Abdeckelements an dem Trägerschaft, das Abdeckelement zumindest teilweise zu umgreifen, insbesondere in den/dem Befestigungsbereich(en). Bevorzugt erstreckt sich das Befestigungsmittel in einem an dem Trägerschaft befestigten Zustand entlang der Längsachse des Trägerschafts betrachtet, insbesondere zu einem zumindest größtenteils Umschließen des Trägerschafts, über einen Winkelbereich von mindestens 180°, vorzugsweise mindestens 200° und bevorzugt mindestens 220°, um die Längsachse des Trägerelements. Vorzugsweise ist das Befestigungsmittel aus einem Draht, insbesondere als ein Federdraht, oder aus einem Blechstreifen ausgebildet. Insbesondere ist das Befestigungsmittel aus einem Metall, insbesondere Stahl oder Edelstahl, ausgebildet. Bevorzugt ist das Befestigungsmittel klammerförmig ausgebildet. Bevorzugt ist das Befestigungsmittel dazu vorgesehen, zur Klemm- und/oder Rastverbindung kraft- und/oder formschlüssig mit dem Trägerschaft verbunden zu werden. Insbesondere ist das Befestigungsmittel dazu vorgesehen, zur Klemm- und/oder Rastverbindung mit dem Trägerschaft an einer Außenwand und/oder einer Außenfläche des Trägerschafts angelegt zu werden, welche insbesondere beabstandet von der Auflagefläche des Trägerschafts ausgebildet ist. Bevorzugt ist das Befestigungsmittel dazu vorgesehen, zur Klemm- und/oder Rastverbindung mit dem Trägerschaft den Trägerschaft über zumindest zwei dem, insbesondere am Trägerschaft angeordneten, Abdeckelement abgewandte Außenflächen zu hintergreifen. Es ist denkbar, dass das Befestigungsmittel zumindest eine Reflektionsfläche aufweist, welche insbesondere in einem an dem Trägerschaft befestigten Zustand an einer dem Trägerschaft abgewandten Seite des Befestigungsmittels angeordnet ist. Alternativ oder zusätzlich ist denkbar, dass das zumindest eine Befestigungsmittel, insbesondere in einem an dem Trägerschaft montierten Zustand, formschlüssig an dem Abdeckelement gehalten ist, insbesondere gegen eine Bewegung parallel zu der/den Längsachse(n) des Abdeckelements und/oder des Trägerschafts entlang des Abdeckelements. Beispielsweise ist denkbar, dass das Abdeckelement Ausnehmungen, wie insbesondere Führungsvertiefungen o.dgl., begrenzt, wobei insbesondere das Befestigungsmittel in dem an dem Trägerschaft montierten Zustand zumindest teilweise in zumindest einer der Ausnehmungen angeordnet ist. Insbesondere erstrecken sich diese Ausnehmungen jeweils zumindest im Wesentlichen senkrecht zur Längsachse des Abdeckelements. Vorzugsweise sind die Ausnehmungen jeweils an einer dem Trägerschaft abgewandten Außenseite des Abdeckelements angeordnet.

Zudem wird vorgeschlagen, dass die Solarmodulhaltevorrichtung zumindest ein, insbesondere das vorher genannte, Befestigungsmittel zu einer Befestigung des Abdeckelements an dem Trägerschaft mittels einer Klemm- und/oder Rastverbindung umfasst, wobei das Befestigungsmittel dazu vorgesehen ist, das Abdeckelement über eine, insbesondere die vorher genannte, maximale Quererstreckung des Abdeckelements, insbesondere die Reflektionsfläche, zu umgreifen. Es kann eine vorteilhaft sichere Befestigung des Abdeckelements an dem Trägerschaft ermöglicht werden. Insbesondere ist das Befestigungsmittel dazu vorgesehen, das Abdeckelement über die maximale Quererstreckung des Abdeckelements vollständig zu umgreifen. Das Befestigungsmittel ist vorzugsweise dazu vorgesehen, an einer der Montageebene zugewandten Außenfläche des Abdeckelements an dem Abdeckelement angelegt zu werden, insbesondere über die maximale Quererstreckung des Abdeckelements. Vorzugsweise umfasst die Solarmodulhaltevorrichtung jeweils mindestens zwei, insbesondere genau zwei, Befestigungsmittel für jedes an dem Trägerschaft zu befestigende Abdeckelement der Reflektionseinheit. Vorzugsweise sind die Befestigungsmittel zur Befestigung des Abdeckelements an dem Trägerschaft jeweils in einem entlang der Längsachse des Abdeckelements ausgebildeten Endbereich des Abdeckelements angeordnet. Das Befestigungsmittel liegt vorzugsweise an der zumindest einen Reflektionsfläche des Abdeckelements an. Vorzugsweise erstreckt sich das Befestigungsmittel in einem an dem Trägerschaft befestigten Zustand über die zwei Befestigungsbereiche, die Reflektionsflächen und den Zwischenbereich des Abdeckelements. Bevorzugt weist das Befestigungsmittel eine maximale Breite von höchstens 2 cm, vorzugsweise höchstens 1 cm, bevorzugt höchstens 0,5 cm und ganz besonders bevorzugt höchstens 0,3 cm, auf. Insbesondere erstreckt sich die maximale Breite des Befestigungsmittels in einem zu einem Befestigen des Abdeckelements an dem Trägerschaft angeordneten Zustand des Befestigungsmittels zumindest im Wesentlichen senkrecht zur Längsachse des Abdeckelements und/oder des Trägerschafts. Durch die maximale Breite des Befestigungsmittels kann eine vorteilhaft geringe Abdeckung der Reflektionsfläche(n) und damit eine vorteilhaft hohe reflektierte Strahlung zur Energiegewinnung ermöglicht werden. Alternativ ist denkbar, dass das Befestigungsmittel dazu vorgesehen ist, von einer dem Abdeckelement abgewandten Seite des Trägerschafts an dem Trägerschaft angeordnet zu werden. Insbesondere ist das Befestigungsmittel in der alternativen Ausgestaltung dazu vorgesehen, das Abdeckelements lediglich in einem Randbereich und/oder, insbesondere dem vorher genannten, Befestigungsbereich zu umgreifen, insbesondere lediglich über einen Teil der maximalen Quererstreckung des Abdeckelements.

Ferner wird vorgeschlagen, dass das Abdeckelement aus einem einzelnen Blechteil ausgeformt ist. Es kann eine vorteilhaft einfache und kostengünstige Ausgestaltung des Abdeckelements erreicht werden. Es kann eine vorteilhaft einteilige Ausgestaltung der Reflektionseinheit, insbesondere des Abdeckelements, ermöglicht werden. Vorzugsweise ist das Abdeckelement aus einem Metall, insbesondere Stahlblech, ausgebildet. Alternativ ist denkbar, dass das Abdeckelement aus einem von einem Metall verschieden ausgebildeten Material ausgebildet ist, beispielsweise aus einem Kunststoff. Insbesondere ist denkbar, dass das Abdeckelement in einem Bereich der Reflektionsflächen eine metallische Beschichtung und/oder Einsätze aus Metall aufweist.

Des Weiteren wird vorgeschlagen, dass die Reflektionsfläche poliert, insbesondere hochglanz-poliert, ausgebildet ist. Es kann eine vorteilhaft hohe Reflektivität des Abdeckelements, insbesondere der Reflektionsfläche, ermöglicht werden. Dadurch kann ein vorteilhaft hoher Anteil einer durch die Solarmodule dringenden Strahlung über die an dem Trägerschaft angeordnete Reflektionseinheit auf die Rückseite der Solarmodule reflektiert werden. Vorzugsweise in einer Ausgestaltung des Abdeckelements aus einem Metall bzw. einem Blechteil, ist das Abdeckelement in einem Bereich der Reflektionsfläche(n) bzw. die Reflektionsfläche selbst poliert, insbesondere hochglanz-poliert.

Zudem wird vorgeschlagen, dass das Abdeckelement an der Reflektionsfläche zumindest eine Reflektionsbeschichtung aufweist. Es kann eine vorteilhaft hohe Reflektivität des Abdeckelements, insbesondere der Reflektionsfläche, ermöglicht werden. Dadurch kann ein vorteilhaft hoher Anteil einer durch die Solarmodule dringenden Strahlung über die an dem Trägerschaft angeordnete Reflektionseinheit auf die Rückseite der Solarmodule reflektiert werden. Beispielsweise ist die Reflektionsbeschichtung als eine metallische Schicht, beispielsweise aus Silber, Aluminium, Gold o.dgl., oder als ein Spiegel ausgebildet. Es ist denkbar, dass das Abdeckelement im Bereich der Reflektionsfläche und/oder auf der Reflektionsbeschichtung zumindest eine Schutzschicht aufweist, beispielsweise eine dielektrische Schicht, ein, insbesondere durchsichtiger Lack o.dgl.

Außerdem wird ein, insbesondere das vorher genannte, Abdeckelement für eine erfindungsgemäße Solarmodulhaltevorrichtung vorgeschlagen.

Durch die erfindungsgemäße Ausgestaltung der Reflektionseinheit kann eine vorteilhaft hohe Modularität erreicht werden, insbesondere da die Reflektionseinheit vorteilhaft unabhängig von einer Ausgestaltung eines Trägerschafts montiert und/oder demontiert werden kann. Es können vorteilhaft geringe Herstellungskosten erreicht werden, insbesondere da eine Ausgestaltung des Trägerschafts für Vorrichtungen mit und ohne Reflektionseinheit beibehalten werden kann. Es kann eine vorteilhaft einfache und schnelle Montage der Reflektionseinheit ermöglicht werden. Die Montage der Reflektionseinheit kann vorteilhaft nach einer Montage des Trägerschafts und/oder nach einer Montage der Solarmodule erfolgen.

Zudem wird eine Solarmodulvorrichtung mit zumindest einem bifazialen Solarmodul, insbesondere einer Mehrzahl von bifazialen Solarmodulen, und mit zumindest einer erfindungsgemäßen Solarmodulhaltevorrichtung vorgeschlagen. Die Solarmodule sind insbesondere in einem montierten Zustand der Solarmodule an der Montageebene angeordnet. Insbesondere sind die Solarmodule in dem montierten Zustand der Solarmodule derart angeordnet, dass Haupterstreckungsebenen der einzelnen Solarmodule zumindest im Wesentlichen parallel zur Montageebene ausgerichtet sind. Die Solarmodule sind bevorzugt über die Solarmodulhaltevorrichtung getragen. Die Solarmodulvorrichtung ist vorzugsweise dazu vorgesehen, über die an der Solarmodulhaltevorrichtung angeordneten bifazialen Solarmodule aus einfallendem Licht elektrische Energie zu gewinnen.

Durch die erfindungsgemäße Ausgestaltung der Solarmodulvorrichtung kann eine vorteilhaft hohe Modularität erreicht werden, insbesondere da die Reflektionseinheit vorteilhaft unabhängig von einer Ausgestaltung des Trägerschafts montiert und/oder demontiert werden kann. Es können vorteilhaft geringe Herstellungskosten erreicht werden, insbesondere da eine Ausgestaltung des Trägerschafts für Vorrichtungen mit und ohne Reflektionseinheit beibehalten werden kann. Es kann eine vorteilhaft einfache und schnelle Montage der Solarmodulvorrichtung ermöglicht werden, insbesondere gegenüber einer einteiligen Ausgestaltung des Trägerschafts und der Reflektionseinheit, vorzugsweise da bei einer Montage des Trägerschafts nicht auf einen Schutz von Reflektionsflächen geachtet werden muss. Die Montage der Reflektionseinheit kann vorteilhaft nach einer Montage des Trägerschafts und/oder nach einer Montage der Solarmodule erfolgen. Durch eine Anordnung der Reflektionseinheit im Nahbereich des Trägerschafts bzw. am Trägerschaft kann eine vorteilhaft kompakte Ausgestaltung der Solarmodulvorrichtung erreicht werden. Es kann eine vorteilhaft hohe Energieausbeute durch die bifazialen Solarmodule erreicht werden.

Des Weiteren betrifft die vorliegende Erfindung ein Verfahren nach Anspruch 18, zur Herstellung eines erfindungsgemäßen Abdeckelements. Bevorzugt wird in zumindest einem Verfahrensschritt aus zumindest einem Metallblech ein Blechteil ausgeformt, insbesondere gestanzt oder geschnitten. Vorzugsweise werden/wird in zumindest einem Verfahrensschritt das Blechteil an einer/zwei zumindest im Wesentlichen parallel zu einer Längsachse des Blechteils angeordneten Randbereichen gewalzt und/oder gehärtet. Bevorzugt wird in zumindest einem Verfahrensschritt zu einer Ausbildung der/des Befestigungsbereiche/s zumindest eine, insbesondere die vorher genannte(n), Ausnehmung(en) in das Blechteil, insbesondere den/die Randbereiche eingebracht, vorzugsweise durch ein Stanz-, Schneid oder Pressverfahren. In zumindest einem Verfahrensschritt wird das Blechteil vorzugsweise zumindest im Wesentlichen parallel zu der Längsachse des Blechteils gebogen. Bevorzugt wird in zumindest einem Verfahrensschritt das Blechteil in einem Bereich zu einer Ausbildung einer Reflektionsfläche poliert. Alternativ oder zusätzlich ist denkbar, dass in zumindest einem Verfahrensschritt eine, insbesondere die vorher genannte, Reflektionsbeschichtung und/oder die Schutzschicht auf das Blechteil, insbesondere die Reflektionsfläche des Blechteils aufgebracht wird/werden. Bevorzugt wird/werden in zumindest einem Verfahrensschritt, insbesondere vor oder nach einer Ausbildung bzw. Beschichtung der Reflektionsfläche(n), das Blechteil an zumindest einem entlang einer maximalen Längserstreckung und/oder der Längsachse des Blechteils ausgebildeten Ende des Blechteils eine/die abgerundete und/oder umgebogene Kante ausgebildet. Bevorzugt ist das Verfahren dazu vorgesehen, das Abdeckelement aus einem/dem einzelnen Blechteil auszubilden.

Durch die erfindungsgemäße Ausgestaltung des Verfahrens kann eine vorteilhaft einfache und schnelle Herstellung der Reflektionseinheit ermöglicht werden. Es können vorteilhaft geringe Herstellungskosten ermöglicht werden. Es kann vorteilhaft eine einteilige Ausgestaltung der Reflektionseinheit erreicht werden.

Die erfindungsgemäße Solarmodulhaltevorrichtung, die erfindungsgemäße Reflektionseinheit, die erfindungsgemäße Solarmodulvorrichtung und/oder das erfindungsgemäße Verfahren sollen/soll hierbei nicht auf die oben beschriebene Anwendung und Ausführungsform beschränkt sein. Insbesondere können/kann die erfindungsgemäße Solarmodulhaltevorrichtung, die erfindungsgemäße Reflektionseinheit, die erfindungsgemäße Solarmodulvorrichtung und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Solarmodulvorrichtung mit bifazialen Solarmodulen und mit einer erfindungsgemäßen Solarmodulhaltevorrichtung, die ein erfindungsgemäßes Abdeckelement umfasst, hergestellt durch ein erfindungsgemäßes Verfahren,
- Fig. 2: eine perspektivische Teildarstellung der erfindungsgemäßen Solarmodulvorrichtung in einem Bereich eines Trägerschafts der erfindungsgemäßen Solarmodulhaltevorrichtung mit dem erfindungsgemäßen Abdeckelement,
- Fig. 3: eine schematische Schnittansicht der erfindungsgemäßen Solarmodulvorrichtung entlang einer Längsachse des Trägerschafts,
- Fig. 4: einen schematischen Querschnitt durch den Trägerschaft und das am Trägerschaft angeordnete erfindungsgemäße Abdeckelement,
- Fig. 5: eine schematische Darstellung eines beispielhaften Ablaufs des erfindungsgemäßen Verfahrens zur Herstellung des erfindungsgemäßen Abdeckelements,
- Fig. 6: eine schematische Detailansicht einer erfindungsgemäßen Solarmodulvorrichtung mit einer alternativen Ausgestaltung einer erfindungsgemäßen Solarmodulhaltevorrichtung in einem Endbereich eines erfindungsgemäßen Abdeckelements der Solarmodulhaltevorrichtung,
- Fig. 7: eine schematische Darstellung eines Befestigungsmittels der alternativen Ausgestaltung der erfindungsgemäßen Solarmodulhaltevorrichtung,
- Fig. 8: eine perspektivische Teildarstellung einer weiteren alternativen Ausgestaltung einer erfindungsgemäßen Solarmodulvorrichtung in einem Bereich eines Trägerschafts der Solarmodulhaltevorrichtung mit einem erfindungsgemäßen Abdeckelement, welches über klammerförmige Befestigungsmittel an dem Trägerschaft befestigt ist,
- Fig. 9: einen schematischen Querschnitt durch den Trägerschaft und das am Trägerschaft angeordnete erfindungsgemäße Abdeckelement der weiteren alternativen Ausgestaltung der erfindungsgemäßen Solarmodulvorrichtung.

### Beschreibung der Ausführungsbeispiele

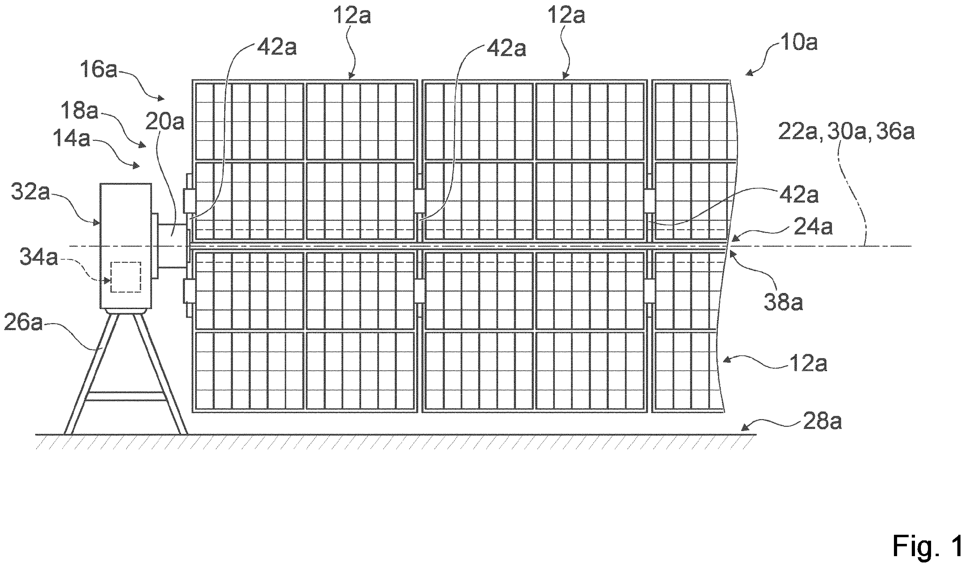

In Figur 1 ist eine Solarmodulvorrichtung 10a mit einer Mehrzahl von bifazialen Solarmodulen 12a und mit einer Solarmodulhaltevorrichtung 14a zu einem Aufstellen der Solarmodule 12a gezeigt. Die Solarmodule 12a der Solarmodulvorrichtung 10a sind entlang einer gedachten Montageebene 16a der Solarmodulhaltevorrichtung 14a angeordnet. Die Solarmodule 12a sind an der Solarmodulhaltevorrichtung 14a befestigt. Die Solarmodulvorrichtung 10a ist zu einer Gewinnung von elektrischer Energie aus auf die Solarmodule 12a treffendem Licht vorgesehen. Die Solarmodulhaltevorrichtung 14a umfasst eine Trägereinheit 18a, welche einen Trägerschaft 20a umfasst. Der Trägerschaft 20a ist dazu vorgesehen, die auf der gedachten Montageebene 16a angeordneten bifazialen Solarmodule 12a zu tragen. Der Trägerschaft 20a, insbesondere eine Längsachse 22a des Trägerschafts 20a, ist zumindest im Wesentlichen parallel zur Montageebene 16a angeordnet. Die Solarmodulhaltevorrichtung 14a umfasst eine Reflektionseinheit 24a zu einer Reflektion von einfallendem Licht auf eine dem Trägerschaft 20a zugewandte Seite der über den Trägerschaft 20a auf der gedachten Montageebene 16a getragenen bifazialen Solarmodule 12a. Die Trägereinheit 18a umfasst zwei Stützen 26a (in Figur 1 ist lediglich eine der Stützen 26a gezeigt) zu einem Aufstellen des Trägerschafts 20a. Der Trägerschaft 20a ist dazu vorgesehen, zumindest im Wesentlichen parallel zu einem Untergrund 28a der Solarvorrichtung 10a bzw. der Solarmodulhaltevorrichtung 14a und/oder zu einer Horizontalen 30a angeordnet zu werden. Die Solarmodulhaltevorrichtung 14a umfasst eine Lagereinheit 32a und einen Motor 34a. Die Lagereinheit 32a ist dazu vorgesehen, den Trägerschaft 20a um eine Rotationsachse 36a beweglich zu lagern. Der Motor 34a ist dazu vorgesehen, den Trägerschaft 20a zusammen mit den am Trägerschaft 20a gehaltenen Solarmodulen 12a in einer Bewegung um die Rotationsachse 36a anzutreiben. Insbesondere ist die Rotationsachse 36a zumindest im Wesentlichen parallel zur Längsachse 22a des Trägerschafts 20a ausgerichtet. Bevorzugt verläuft die Rotationsachse 36a entlang einer maximalen Längserstreckung des Trägerschafts 20a durch den Trägerschaft 20a. Es sind auch Ausgestaltungen der Solarmodulhaltevorrichtung 14a mit einem starr angeordneten bzw. unbeweglich ausgebildeten Trägerschaft 20a denkbar.

Die Solarmodulhaltevorrichtung 14a, insbesondere die Trägereinheit 18a, ist dazu vorgesehen, die Solarmodule 12a derart zu halten, dass zwischen den Solarmodulen 12a zumindest im Wesentlichen parallel zur Längsachse 22a des Trägerschafts 20a ein Spalt 38a gebildet ist. Der Spalt 38a erstreckt sich entlang der Längsachse 22a des Trägerschafts 20a, insbesondere zumindest im Wesentlichen vollständig über eine gesamte Breite der an der Solarmodulhaltevorrichtung 14a angeordneten Solarmodule 12a. Der Spalt 38a ist derart angeordnet, dass eine Gerade, welche die Montageebene 16a im Bereich des Spalts 38a senkrecht schneidet, durch den Trägerschaft 20a verläuft. Es ist auch denkbar, dass die Solarmodule 12a jeweils zumindest einen lichtdurchlässigen Bereich aufweisen, wobei die Trägereinheit 18a dazu vorgesehen ist, die Solarmodule 12a derart zu halten, dass der lichtdurchlässige Bereich zumindest im Wesentlichen parallel zur Längsachse 22a des Trägerschafts 20a angeordnet ist.

Die Trägereinheit 18a umfasst eine Vielzahl von Befestigungselementen 42a, die dazu vorgesehen sind, die Solarmodule 12a an dem Trägerschaft 20a zu befestigen. Insbesondere sind die Befestigungselemente 42a dazu vorgesehen, die Solarmodule 12a an der Montageebene 16a anzuordnen und zu fixieren. Jeweils zwei der Befestigungselemente 42a sind dazu vorgesehen, zusammen zumindest ein zwischen den zwei Befestigungselementen 42a an der Montageebene 16a angeordnetes Solarmodul 12a an dem Trägerschaft 20a zu befestigen.

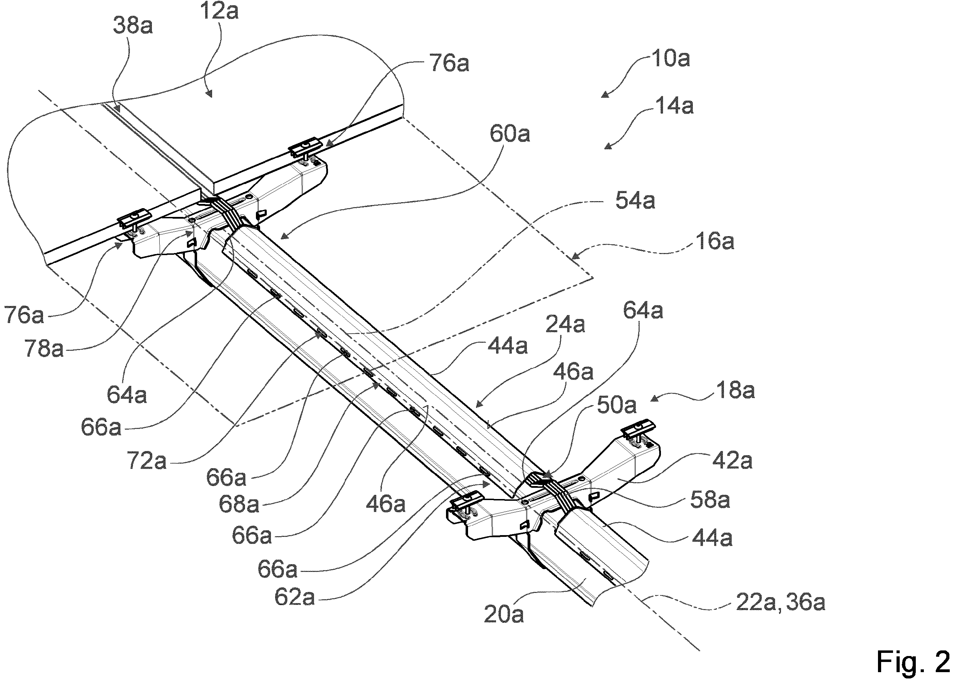

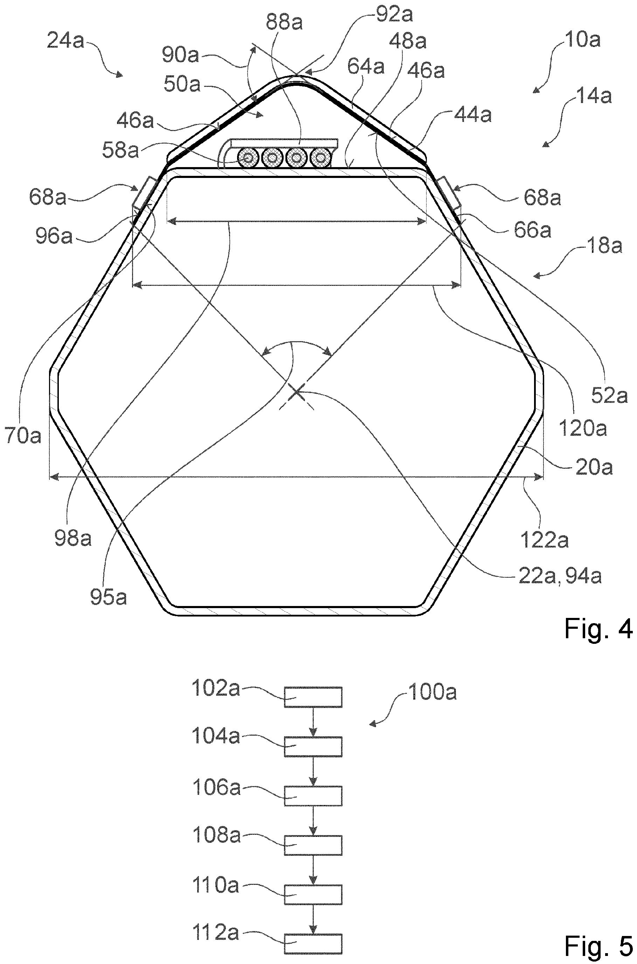

In Figur 2 ist die Solarmodulvorrichtung 10a in einem Bereich des Trägerschafts 20a gezeigt, wobei ein über den Trägerschaft 20a gehaltenes Solarmodul 12a insbesondere nicht gezeigt ist. Die Reflektionseinheit 24a umfasst eine Mehrzahl von Abdeckelementen 44a, welche jeweils zwei Reflektionsflächen 46a aufweisen und getrennt von dem Trägerschaft 20a ausgebildet sind. Die Abdeckelemente 44a sind dazu vorgesehen, in einem Nahbereich des Trägerschafts 20a befestigt zu werden. Die Abdeckelemente 44a sind jeweils dazu vorgesehen, in zumindest einem montierten Zustand des jeweiligen Abdeckelements 44a eine Außenfläche 48a des Trägerschafts 20a (siehe Figur 4) zu verdecken. Die Abdeckelemente 44a sind jeweils dazu vorgesehen, in dem montierten Zustand zumindest teilweise flächig an dem Trägerschaft 20a angelegt zu werden (vgl. auch Figur 4). Die Abdeckelemente 44a sind jeweils an einer der Montageebene 16a bzw. den Solarmodulen 12a zugewandten Außenseite des Trägerschafts 20a angeordnet. Die Abdeckelemente 44a sind dazu vorgesehen, an dem Trägerschaft 20a befestigt zu werden. Alternativ ist denkbar, dass die Abdeckelemente 44a dazu vorgesehen sind, an den Befestigungselementen 42a oder einem anderen Bauteil der Trägereinheit 18a befestigt zu werden und in dem Nahbereich des Trägerschafts 20a angeordnet zu werden. Die Abdeckelemente 44a sind jeweils dazu vorgesehen, in dem montierten Zustand zusammen mit dem Trägerschaft 20a eine Durchführung 50a zu begrenzen (vgl. Figur 4). Die Abdeckelemente 44a sind jeweils zumindest im Wesentlichen länglich ausgebildet. Die Abdeckelemente 44a der Reflektionseinheit 24a sind zumindest im Wesentlichen baugleich ausgebildet.

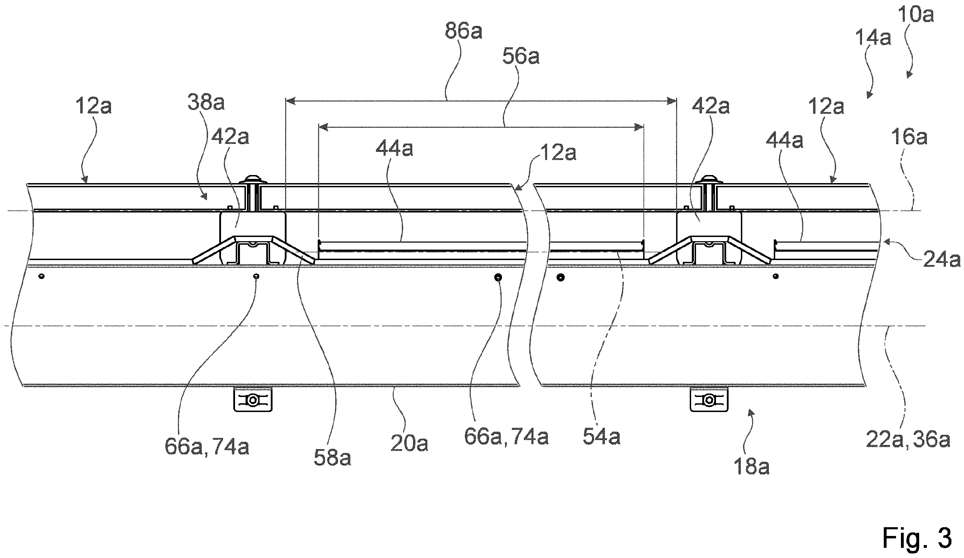

Die Durchführungen 50a sind jeweils durch eine Innenfläche 52a eines der Abdeckelemente 44a (vgl. Figur 4) und die Außenfläche 48a des Trägerschafts 20a begrenzt. Die Durchführungen 50a erstrecken sich jeweils zumindest im Wesentlichen parallel zu einer Längsachse 54a des die jeweilige Durchführung 50a begrenzenden Abdeckelements 44a und des Trägerschafts 20a. Die Durchführungen 50a erstrecken sich jeweils zumindest im Wesentlichen vollständig über eine maximale Längserstreckung 56a des die jeweilige Durchführung 50a begrenzenden Abdeckelements 44a (vgl. Figur 3).

Die Abdeckelemente 44a sind jeweils dazu vorgesehen, an dem Trägerschaft 50a verlaufende Kabel 58a der Solarmodulvorrichtung 10a und/oder der Solarmodulhaltevorrichtung 14a, welche insbesondere zu einem Anschluss von den bifazialen Solarmodulen 12a vorgesehen sind, über die von dem jeweiligen Abdeckelement 44a begrenzte Durchführung 50a zumindest teilweise aufzunehmen. Die Abdeckelemente 44a sind jeweils als ein kabelführendes Element ausgebildet, wobei insbesondere die Durchführung 50a einen Kabelkanal ausbildet. Die Abdeckelemente 44a sind dazu vorgesehen, die Kabel 58a über die maximale Längserstreckung 56a des jeweiligen Abdeckelements 44a aufzunehmen, wobei insbesondere die Kabel 58a über die maximale Längserstreckung 56a des jeweiligen Abdeckelements 44a innerhalb der Durchführung 50a angeordnet sind. Die Kabel 58a verlaufen über eine maximale Längserstreckung 56a der einzelnen Abdeckelemente 44a innerhalb der Durchführungen 50a. Die Abdeckelemente 44a weisen jeweils an zwei entlang einer maximalen Längserstreckung 56a bzw. der Längsachse 54a des jeweiligen Abdeckelements 44a ausgebildeten Enden 60a, 62a eine umgebogene Kante 64a auf. Die umgebogenen Kanten 64a begrenzen jeweils die die Durchführung 50a begrenzende Innenfläche 52a des Abdeckelements 44a an zwei voneinander abgewandten Seiten. Die umgebogenen Kanten 64a der Abdeckelemente 44a sind jeweils in einem Bereich einer Öffnung einer der Durchführungen 50a angeordnet.

Die Solarmodulhaltevorrichtung 14a umfasst eine Vielzahl von Befestigungsmitteln 66a zu einer Befestigung der Abdeckelemente 44a an dem Trägerschaft 20a. Die Befestigungsmittel 66a sind als Schrauben ausgebildet. Die Abdeckelemente 44a bilden jeweils zwei Befestigungsbereiche 68a aus, welche sich jeweils zumindest im Wesentlichen parallel zur Längsachse 54a des jeweiligen Abdeckelements 44a über die maximalen Längserstreckung 56a des jeweiligen Abdeckelements 44a erstrecken. Die Abdeckelemente 44a weisen jeweils in den Befestigungsbereichen 68a eine zumindest im Wesentlichen ebene Anlegefläche 70a auf (vgl. Figur 4). Die Abdeckelemente 44a sind jeweils dazu vorgesehen, über die Anlegeflächen 70a flächig an dem Trägerschaft 20a angelegt zu werden. Alternativ sind auch andere Ausgestaltungen des Abdeckelements 44a denkbar, beispielsweise mit lediglich einem Befestigungsbereich 68a bzw. einer Anlegefläche 70a, mit gebogenen Anlegeflächen 70a o.dgl. Innerhalb der Befestigungsbereiche 68a begrenzen die Abdeckelemente 44a jeweils eine Mehrzahl von Ausnehmungen 72a, die insbesondere dazu vorgesehen sind, eines der Befestigungsmittel 66a zu einem Befestigen des jeweiligen Abdeckelements 44a an dem Trägerschaft 20a aufzunehmen. Der Trägerschaft 20a begrenzt eine Vielzahl von Ausnehmungen 74a (siehe Figur 3), welche insbesondere als Schraublöcher ausgebildet sind. Die von dem Trägerschaft 20a begrenzten Ausnehmungen 74a sind jeweils dazu vorgesehen, eines der Befestigungsmittel 66a zu einem Befestigen des jeweiligen Abdeckelements 44a an dem Trägerschaft 20a aufzunehmen. Die Abdeckelemente 44a begrenzen jeweils elf Ausnehmungen 72a an jedem der zwei Befestigungsbereiche 68a. Es sind jedoch auch andere Ausgestaltungen der Abdeckelemente 44a denkbar. Die Abdeckelemente 44a sind jeweils aus einem einzelnen Blechteil ausgeformt. Die Abdeckelemente 44a sind jeweils aus Stahlblech ausgebildet. Die Reflektionsflächen 46a der Abdeckelemente 44a sind jeweils poliert, insbesondere hochglanz-poliert, ausgebildet. Alternativ oder zusätzlich ist denkbar, dass die Abdeckelemente 44a jeweils an den Reflektionsflächen 46a zumindest eine Reflektionsbeschichtung aufweisen.

Vorzugsweise sind auch Ausgestaltungen der Solarmodulhaltevorrichtung 14a mit lediglich einem Abdeckelement 44a denkbar. Insbesondere sind alle hier beschriebenen Merkmale der Abdeckelemente 44a auch auf einzelne Abdeckelemente 44a lesbar.

Die Befestigungselemente 42a sind jeweils kraft- und/oder formschlüssig an dem Trägerschaft 20a befestigt. Die Befestigungselemente 42a bilden jeweils zwei Haltebereiche 76a aus zu einem Anlegen der Solarmodule 12a an die Befestigungselemente 42a. Die Haltebereiche 76a sind jeweils parallel zur Montageebene 16a ausgerichtet. Vorzugsweise spannen die Haltebereiche 76a die gedachte Montageebene 16a auf. Die zwei Haltebereiche 76a der einzelnen Befestigungselemente 42a sind senkrecht zur Montageebene 16a betrachtet beabstandet voneinander und versetzt zum Trägerschaft 20a angeordnet. Die Befestigungselemente 42a bilden zwischen den zwei Haltebereichen 76a jeweils einen Zwischenbereich 78a aus, welcher beabstandet von der Montageebene 16a bzw. einem an dem jeweiligen Befestigungselement 42a befestigten Solarmodul 12a ausgebildet ist. Insbesondere sind die Befestigungselemente 42a innerhalb des Zwischenbereichs 78a beabstandet von der Montageebene 16a bzw. den/dem Solarmodul(en) 12a angeordnet. Bevorzugt begrenzen die Befestigungselemente 42a mit der Montageebene 16a über den Zwischenbereich 78a jeweils eine Aussparung, welche insbesondere dazu vorgesehen sind, möglichst viel Licht auf die Rückseiten der bifazialen Solarmodule 12a durchzulassen.

In Figur 3 ist eine seitliche Schnittansicht der Solarmodulvorrichtung 10a gezeigt, wobei insbesondere die Solarmodulvorrichtung 10a im Bereich des Trägerschafts 20a entlang der Längsachse 22a des Trägerschafts 20a geschnitten gezeigt ist. Die Befestigungselemente 42a der Trägereinheit 18a, welche zu einem Befestigen der Solarmodule 12a an dem Trägerschaft 20a vorgesehen sind, sind dazu vorgesehen, entlang des Trägerschafts 20a beabstandet voneinander angeordnet zu werden. Jeweils zwei der Befestigungselemente 42a der Trägereinheit 18a sind dazu vorgesehen, gemeinsam eines der bifazialen Solarmodule 12a an dem Trägerschaft 20a zu befestigen. Die maximale Längserstreckung 56a der einzelnen Abdeckelemente 44a entspricht mindestens 50 %, vorzugsweise mindestens 70 % und bevorzugt mindestens 80 %, eines minimalen Abstands 86a der zwei Befestigungselemente 42a. Die maximale Längserstreckung 56a der einzelnen Abdeckelemente 44a entspricht insbesondere zumindest im Wesentlichen 90 % des minimalen Abstands 86a der zwei Befestigungselemente 42a. Die maximale Längserstreckung 56a der einzelnen Abdeckelemente 44a beträgt mindestens 20 cm, vorzugsweise mindestens 30 cm und bevorzugt mindestens 40 cm. Insbesondere ist der minimale Abstand 86a der zwei Befestigungselemente 42a abhängig von einer Größe der an der Solarmodulhaltevorrichtung 14a zu befestigenden Solarmodule 12a. Die Kabel 58a sind jeweils aus den Durchführungen 50a heraus zu den Befestigungselementen 42a geführt, insbesondere durch die Befestigungselemente 42a hindurch entlang der Längsachse 22a des Trägerschafts 20a. Insbesondere können die Solarmodule 12a über die Kabel 58a bzw. die Befestigungselemente 42a elektrisch angeschlossen werden. Alternativ ist denkbar, dass zwischen den zwei Befestigungselementen 42a eine Mehrzahl von, insbesondere kürzeren, Abdeckelementen angeordnet werden, welche jeweils eine Durchführung 50a begrenzen. Zudem ist denkbar, dass die Abdeckelemente zusammen eine einzelne Durchführung 50a ausbilden. Insbesondere weisen die Abdeckelemente in der alternativen Ausgestaltung zusammen eine maximale Längserstreckung 56a auf, welche mindestens 50 %, vorzugsweise mindestens 70 % und bevorzugt mindestens 80 %, des minimalen Abstands 86a der zwei Befestigungselemente 42a entspricht.

In Figur 4 ist ein senkrecht zur Längsachse 22a des Trägerschafts 20a ausgerichteter Querschnitt des Trägerschafts 20a, eines der an dem Trägerschaft 20a angeordneten Abdeckelemente 44a und der entlang des Trägerschafts 20a innerhalb der Durchführung 50a verlaufenden Kabel 58a gezeigt. Der Trägerschaft 20a weist Haltemittel 88a auf (in Figur 4 lediglich ein Haltemittel 88a gezeigt), welche dazu vorgesehen sind, die Kabel 58a innerhalb der Durchführungen 50a zu fixieren. Die Haltemittel 88a sind an dem Trägerschaft 20a, insbesondere der Außenfläche 48a des Trägerschafts 20a, angeordnet. Die Haltemittel 88a sind jeweils als ein Haken ausgebildet. Alternativ sind auch andere Ausgestaltungen der Haltemittel 88a denkbar, beispielsweise als eine Lasche, als ein Klettverbindungselement, als eine Klammer, als ein Clip o.dgl. Die Haltemittel 88a sind dazu vorgesehen, die Kabel 58a werkzeuglos an dem Trägerschaft 20a fixierbar und/oder von dem Trägerschaft 20a lösbar auszubilden. Die Haltemittel 88a sind entlang der maximalen Längserstreckung 56a der einzelnen Abdeckelemente 44a verteilt an dem Trägerschaft 20a angeordnet. Die Kabel 58a sind, insbesondere über die Haltemittel 88a, jeweils an der die Durchführung 50a begrenzenden Außenfläche 48a des Trägerschafts 20a angeordnet. Alternativ oder zusätzlich ist denkbar, dass die Haltemittel 88a an den/einem der Abdeckelemente(n) 44a, insbesondere der Innenfläche 52a der/eines Abdeckelements 44a, angeordnet sind.

Die zwei Reflektionsflächen 46a der einzelnen Abdeckelemente 44a weisen jeweils eine Haupterstreckungsebene auf, wobei die Haupterstreckungsebenen der zwei Reflektionsflächen 46a eines der Abdeckelemente 44a in einem Winkel 90a von mindestens 45°, vorzugsweise mindestens 60° und bevorzugt mindestens 70°, zueinander angeordnet sind. Die zwei Reflektionsflächen 46a der einzelnen Abdeckelemente 44a sind jeweils zumindest im Wesentlichen eben ausgebildet und geneigt zueinander angeordnet. Die Abdeckelemente 44a bilden jeweils einen gebogenen Zwischenbereich 92a aus, wobei die zwei Reflektionsflächen 46a über den Zwischenbereich 92a aneinander angeordnet sind. Die zwei Befestigungsbereiche 68a sind jeweils entlang der Längsachse 54a des Abdeckelements 44a betrachtet an einer dem Zwischenbereich 92a abgewandten Kante einer der Reflektionsflächen 46a angeordnet. Die zwei Befestigungsbereiche 68a sind an zwei voneinander abgewandten Seiten des Abdeckelements 44a angeordnet.

Die Abdeckelemente 44a erstrecken sich jeweils in dem montierten Zustand entlang einer Haupterstreckungsachse 94a des Trägerschafts 20a betrachtet um mindestens 40°, vorzugsweise mindestens 50° und bevorzugt mindestens 60°, um die Haupterstreckungsachse 94a des Trägerschafts 20a, wobei insbesondere ein Winkelbereich 95a um die Haupterstreckungsachse 94a, insbesondere eine Mittelachse, des Trägerschafts 20a von dem Abdeckelement 44a umschlossen bzw. verdeckt ist. Die Befestigungsmittel 66a sind dazu vorgesehen, zu einem Befestigen eines der Abdeckelemente 44a am Trägerschaft 20a außerhalb der von dem jeweiligen Abdeckelement 44a begrenzten Durchführung 50a angeordnet zu werden. Die zwei Befestigungsbereiche 68a erstrecken sich beabstandet von den Reflektionsflächen 46a und der Innenfläche 52a des Abdeckelements 44a. Die Anlegeflächen 70a sind entlang der Längsachse 54a des Abdeckelements 44a betrachtet jeweils geneigt zu den zwei Reflektionsflächen 46a ausgebildet. Die Anlegeflächen 70a sind entlang der Längsachse 54a des Abdeckelements 44a betrachtet jeweils korrespondierend, insbesondere parallel, zu Auflageflächen 96a des Trägerschafts 20a ausgebildet. Insbesondere ist das Abdeckelement 44a dazu vorgesehen, über die Anlegeflächen 70a an den Auflageflächen 96a des Trägerschafts 20a angelegt zu werden. Die Auflageflächen 96a des Trägerschafts 20a sind insbesondere beabstandet von der die Durchführung 50a begrenzenden Außenfläche 48a des Trägerschafts 20a angeordnet. Der Trägerschaft 20a weist entlang der Längsachse 22a des Trägerschafts 20a betrachtet eine im Wesentlichen sechseckige Grundform auf, wobei die Kanten des Trägerschafts 20a, insbesondere der Grundform, vorzugsweise abgerundet ausgebildet sind. Der Trägerschaft 20a ist als ein Hohlprofil ausgebildet. Bevorzugt ist der Trägerschaft 20a aus einem Metall, insbesondere Aluminium oder Stahl, ausgebildet.

Die Durchführungen 50a sind jeweils in zumindest einer senkrecht zur Längsachse 54a des die jeweilige Durchführung 50a begrenzenden Abdeckelements 44a und/oder des Trägerschafts 20a ausgerichteten Schnittebene betrachtet zumindest im Wesentlichen vollständig geschlossen ausgebildet. Die Durchführungen 50a weisen jeweils eine im Wesentlichen dreieckige Querschnittsfläche auf. Die umgebogenen Kanten 64a der Abdeckelemente 44a erstrecken sich jeweils entlang der Längsachse 54a des die jeweilige Kante 64a aufweisenden Abdeckelements 44a betrachtet zumindest im Wesentlichen vollständig über eine maximale Quererstreckung 98a der die Durchführung 50a begrenzenden Innenfläche 52a des die jeweilige Kante 64a aufweisenden Abdeckelements 44a, welche insbesondere zumindest im Wesentlichen senkrecht zur Längsachse 54a des Abdeckelements 44a ausgerichtet ist.

Das Abdeckelemente 44a sind jeweils dazu vorgesehen, senkrecht zu der Längsachse 22a bzw. einer Mittelachse des Trägerschafts 20a betrachtet, bevorzugt senkrecht zur Montageebene 16a von der Montageebene 16a aus betrachtet, insbesondere in einem Bereich des Trägerschafts 20a in dem das jeweilige Abdeckelement 44a angeordnet ist, mindestens 50 %, vorzugsweise mindestens 60 % und bevorzugt mindestens 65 %, einer sichtbaren Oberfläche des Trägerschafts 20a zu verdecken. Die Abdeckelemente 44a weisen jeweils eine maximale Quererstreckung 120a auf, die sich insbesondere senkrecht zu der Längsachse 54a des jeweiligen Abdeckelements 44a (vgl. Figur 2) erstreckt, wobei die maximale Quererstreckung 120a der Abdeckelemente 44a mindestens 50 %, vorzugsweise mindestens 60 % und bevorzugt mindestens 65 %, einer maximalen Quererstreckung 122a des Trägerschafts 20a entspricht, die sich insbesondere senkrecht zur Längsachse 22a des Trägerschafts 20a und parallel zur maximalen Quererstreckung 120a des Abdeckelements 44a erstreckt. Die maximale Quererstreckung 120a der Abdeckelemente 44a, die sich insbesondere senkrecht zur Längsachse 54a des Abdeckelements 44a erstreckt, beträgt mindestens 5 cm, vorzugsweise mindestens 10 cm und bevorzugt mindestens 12 cm.

In Figur 5 ist ein beispielhafter Ablauf eines Verfahrens 100a zur Herstellung eines der Abdeckelemente 44a gezeigt. In einem Verfahrensschritt 102a des Verfahrens 100a wird aus einem Metallblech ein Blechteil ausgeformt, insbesondere gestanzt, geschnitten oder gepresst. In einem weiteren Verfahrensschritt 104a des Verfahrens 100a wird das Blechteil an zwei zumindest im Wesentlichen parallel zu einer Längsachse des Blechteils angeordneten Randbereichen gewalzt und/oder gehärtet. In einem weiteren Verfahrensschritt 106a des Verfahrens 100a werden zu einer Ausbildung der Befestigungsbereiche 68a des herzustellenden Abdeckelements 44a die Ausnehmungen 72a in das Blechteil, insbesondere die Randbereiche eingebracht, vorzugsweise durch ein Stanz-, Schneid oder Pressverfahren. In einem weiteren Verfahrensschritt 108a des Verfahrens 100a wird das Blechteil zumindest im Wesentlichen parallel zu der Längsachse des Blechteils gebogen, wobei der Zwischenbereich 92a des herzustellenden Abdeckelements 44a ausgeformt wird und die Befestigungsbereiche 68a jeweils relativ zu den auszubildenden Reflektionsflächen 46a des herzustellenden Abdeckelements 44a geneigt werden. In einem weiteren Verfahrensschritt 110a des Verfahrens 100a wird das Blechteil in den zumindest im Wesentlichen ebenen Bereichen zwischen dem Zwischenbereich 92a des herzustellenden Abdeckelements 44a und den zwei Befestigungsbereichen 68a des herzustellenden Abdeckelements 44a zu einer Ausbildung der Reflektionsflächen 46a des herzustellenden Abdeckelements 44a poliert. Alternativ oder zusätzlich ist denkbar, dass in zumindest einem Verfahrensschritt des Verfahrens 100a eine Reflektionsbeschichtung und/oder eine Schutzschicht auf das Blechteil, insbesondere die Reflektionsflächen des Blechteils, aufgebracht wird/werden. In einem weiteren Verfahrensschritt 112a des Verfahrens 100a wird das Blechteil an zwei entlang einer maximalen Längserstreckung und/oder der Längsachse des Blechteils ausgebildeten Enden des Blechteils jeweils die umgebogenen Kanten 64a des herzustellenden Abdeckelements 44a ausgebildet.

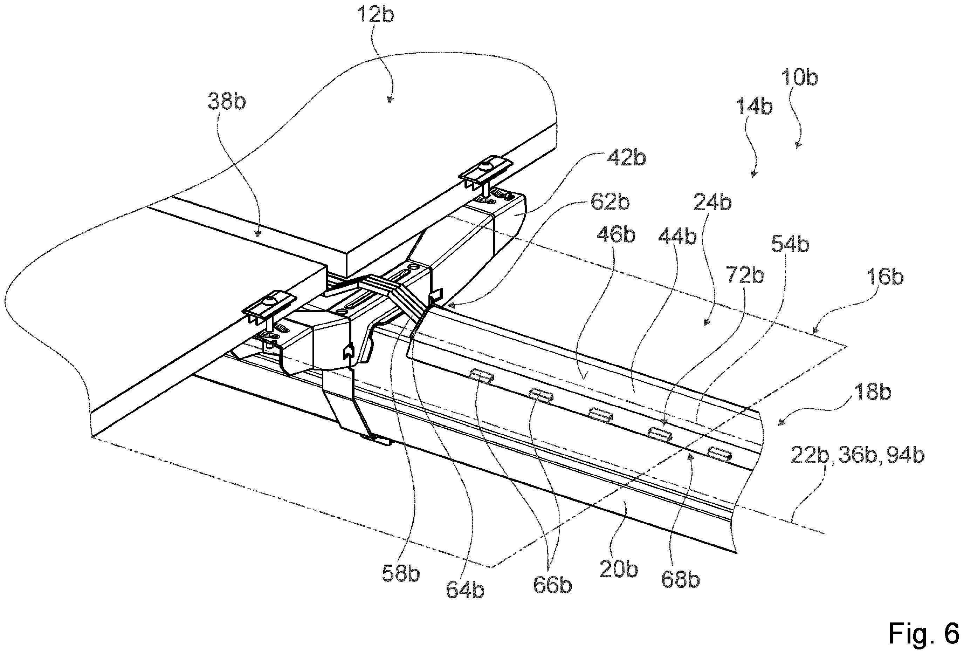

In den Figuren 6 bis 9 sind weitere Ausführungsbeispiele der Erfindung gezeigt. Die nachfolgende Beschreibung und Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des vorhergehenden Ausführungsbeispiels, insbesondere der Figuren 1 bis 5, verwiesen werden kann. Zur Unterscheidung der Ausführungsbeispiele ist der Buchstabe a den Bezugszeichen des Ausführungsbeispiels in den Figuren 1 bis 5 nachgestellt. In den Ausführungsbeispielen der Figuren 6 bis 9 ist der Buchstabe a jeweils durch einen der Buchstaben b und c ersetzt.

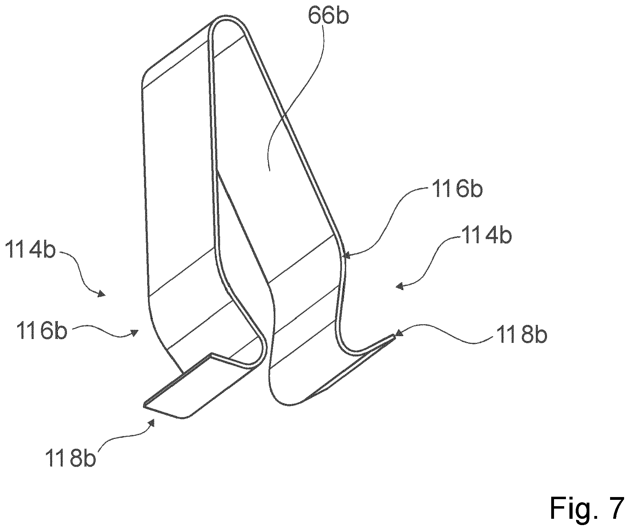

In Figur 6 ist eine Solarmodulvorrichtung 10b mit einer alternativen Ausgestaltung einer Solarmodulhaltevorrichtung 14b zu einem Aufstellen von bifazialen Solarmodulen 12b gezeigt. Die Solarmodulvorrichtung 10b umfasst eine Mehrzahl von bifazialen Solarmodulen 12b. Die Solarmodulhaltevorrichtung 14b umfasst eine Trägereinheit 18b, welche einen Trägerschaft 20b umfasst. Der Trägerschaft 20b ist dazu vorgesehen, die auf einer gedachten Montageebene 16b angeordneten bifazialen Solarmodule 12b der Solarmodulvorrichtung 10b zu tragen. Der Trägerschaft 20b, insbesondere eine Längsachse 22b des Trägerschafts 20b, ist zumindest im Wesentlichen parallel zur Montageebene 16b angeordnet. Die Solarmodulhaltevorrichtung 14b umfasst eine Reflektionseinheit 24b zu einer Reflektion von einfallendem Licht auf eine dem Trägerschaft 20b zugewandte Seite der über den Trägerschaft 20b auf der gedachten Montageebene 16b getragenen bifazialen Solarmodule 12b. Die Reflektionseinheit 24b umfasst eine Mehrzahl von Abdeckelementen 44b, welche jeweils zwei Reflektionsflächen 46b aufweisen und getrennt von dem Trägerschaft 20b ausgebildet sind. Die Abdeckelemente 44b sind dazu vorgesehen, in einem Nahbereich des Trägerschafts 20b befestigt zu werden. Die Abdeckelemente 44b sind dazu vorgesehen, in einem montierten Zustand eine Außenfläche 48b des Trägerschafts 20b (in Figur 6 nicht gezeigt, vgl. Figur 4) zu verdecken. Die in den Figuren 6 und 7 dargestellte Solarmodulhaltevorrichtung 14b weist eine zumindest im Wesentlichen analoge Ausgestaltung zu der in der Beschreibung der Figuren 1 bis 5 beschriebenen Solarmodulhaltevorrichtung 14a auf, so dass bezüglich einer Ausgestaltung der in den Figuren 6 und 7 dargestellten Solarmodulhaltevorrichtung 14b zumindest im Wesentlichen auf die Beschreibung der Figuren 1 bis 5 verwiesen werden kann. Im Unterschied zu der in der Beschreibung der Figuren 1 bis 5 beschriebenen Solarmodulhaltevorrichtung 14a umfasst die in den Figuren 6 und 7 dargestellte Solarmodulhaltevorrichtung 14b eine Vielzahl von Befestigungsmitteln 66b zu einer Befestigung der Abdeckelemente 44b an dem Trägerschaft 20b, wobei die Befestigungsmittel 66b jeweils zu einer Rastverbindung vorgesehen sind. Die Befestigungsmittel 66b sind dazu vorgesehen, zu einem Befestigen eines der Abdeckelemente 44b am Trägerschaft 20b außerhalb einer durch das jeweilige Abdeckelement 44b und den Trägerschaft 20b begrenzten Durchführung 50b (in Figur 6 nicht gezeigt, vgl. Figur 4) angeordnet zu werden. Die Befestigungsmittel 66b sind jeweils als eine Klammer ausgebildet (vgl. Figur 7). Die Befestigungsmittel 66b sind dazu vorgesehen, zur Befestigung des Abdeckelements 44b durch von dem Abdeckelement 44b begrenzte Ausnehmungen 72b und von dem Trägerschafts 20b begrenzte Ausnehmungen 74b (in Figur 6 nicht gezeigt, vgl. Figur 3) hindurch geführt zu werden, wobei insbesondere eine kraft- und formschlüssige Verbindung des Abdeckelements 44b und des Trägerschafts 20b entsteht. Die Befestigungsmittel 66b sind dazu vorgesehen, das Abdeckelement 44b durch ein Verklemmen an dem Trägerschaft 20b zu befestigen. Alternativ oder zusätzlich ist denkbar, dass die Solarmodulhaltevorrichtung 14b zumindest ein Befestigungsmittel bzw. eine Mehrzahl an Befestigungsmitteln zu einer Befestigung des Abdeckelements 44b an dem Trägerschaft 20b umfasst, wobei insbesondere das/die Befestigungsmittel jeweils verschieden von einem Rastelement ausgebildet sind/ist. Beispielsweise sind/ist die/das Befestigungsmittel zu einer Schraub- und/oder Pressverbindung vorgesehen. Beispielsweise sind/ist die/das Befestigungsmittel als Schrauben, Nieten o.dgl. ausgebildet. Alternativ oder zusätzlich ist denkbar, dass das/die Befestigungsmittel 66b an dem Abdeckelement 44b oder dem Trägerschaft 20b befestigt, stoffschlüssig mit diesem verbunden und/oder einteilig mit diesem ausgebildet ist/sind. Beispielsweise begrenzt der Trägerschaft 20b die Mehrzahl von Ausnehmungen 74b, wobei das Abdeckelement 44b eine Mehrzahl von Befestigungsmitteln 66b ausbildet, welche dazu vorgesehen sind, zu einer Montage des Abdeckelements 44b an dem Trägerschaft 20b durch die Ausnehmungen 74b des Trägerschafts 20b gedrückt zu werden. In Figur 7 ist eine schematische Darstellung eines der Befestigungsmittel 66b gezeigt. Die Befestigungsmittel 66b sind jeweils aus einem einzelnen Stück Metall, insbesondere Metallblech, ausgebildet. Die Befestigungsmittel 66b weisen jeweils zwei Flügel 114b auf, die entlang einer durch die zwei Flügel 114b verlaufenden Achse relativ zueinander bewegbar sind. Insbesondere sind die Befestigungsmittel 66b derart ausgebildet, dass die zwei Flügel 114b bei einer Bewegung aufeinander zu mit einer Rückstellkraft beaufschlagt werden. Die Flügel 114b bilden jeweils einen Rastfortsatz 116b aus, welcher jeweils auf einer dem anderen Flügel 114b abgewandten Seite eines der Flügel 114b angeordnet ist. Bevorzugt bilden die zwei Flügel 114b jeweils einen weiteren Rastfortsatz 118b aus, die jeweils in einem Endbereich des jeweiligen den Rastfortsatz ausbildenden Flügels 114b angeordnet sind. Bevorzugt sind die Befestigungsmittel 66b dazu vorgesehen, das Abdeckelement 44b und den Trägerschaft 20b, insbesondere Wandungen des Abdeckelements 44b und des Trägerschafts 20b, zu einem Befestigen des Abdeckelements 44b an dem Trägerschaft 20b zwischen dem Rastfortsatz 116b und dem weiteren Rastfortsatz 118b zu verklemmen. Die Befestigungsmittel 66b sind dazu vorgesehen, das Abdeckelement 44b werkzeuglos an dem Trägerschaft 20a befestigbar und/oder von dem Trägerschaft 20a lösbar auszubilden. Alternativ ist denkbar, dass die Befestigungsmittel 66b jeweils als eine Kunststoffschraube ausgebildet sind, welche dazu vorgesehen sind, zu einer Befestigung des Abdeckelements 44b an dem Trägerschaft 20b mit einem als Kunststoffeinsatz ausgebildeten weiteren Befestigungsmittel, welches insbesondere an dem Trägerschaft 20b angeordnet, insbesondere befestigt, ist, zusammenzuwirken.

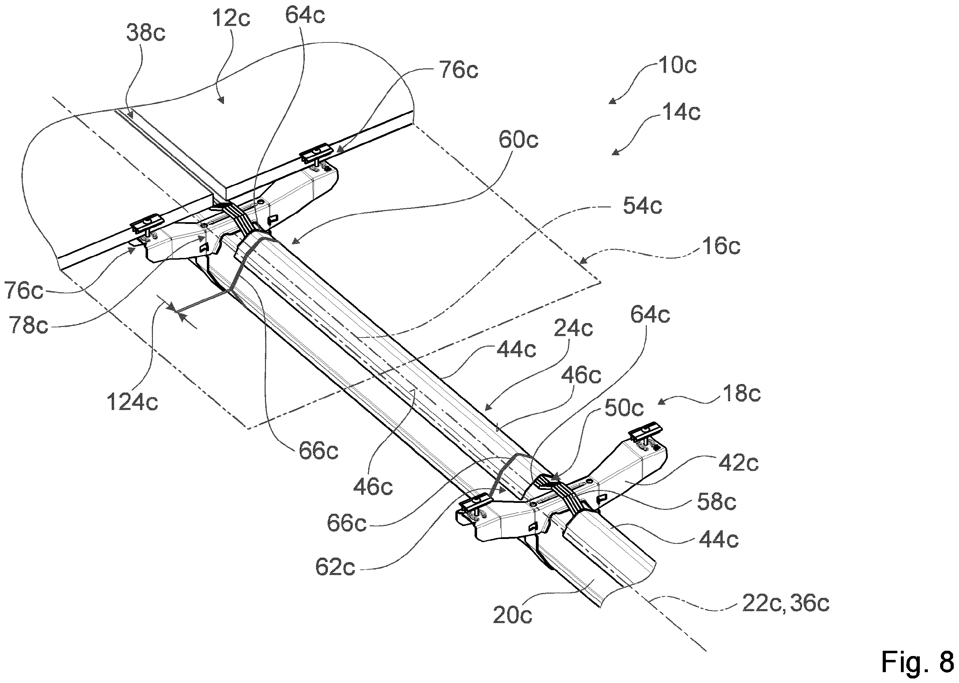

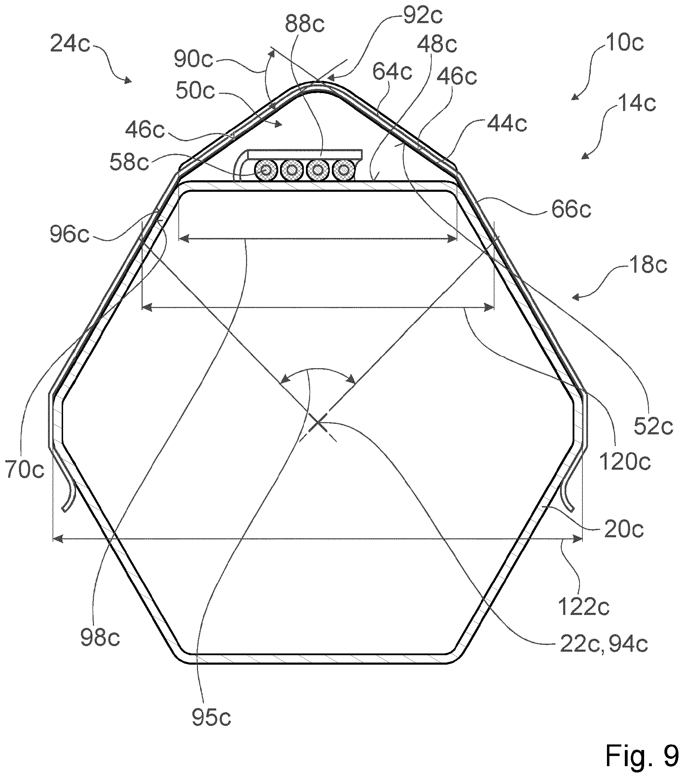

In den Figuren 8 und 9 ist eine Solarmodulvorrichtung 10c mit einer weiteren alternativen Ausgestaltung einer Solarmodulhaltevorrichtung 14c zu einem Aufstellen von bifazialen Solarmodulen 12c gezeigt. Die Solarmodulvorrichtung 10c umfasst eine Mehrzahl von bifazialen Solarmodulen 12c. Die Solarmodulhaltevorrichtung 14c umfasst eine Trägereinheit 18c, welche einen Trägerschaft 20c umfasst. Der Trägerschaft 20c ist dazu vorgesehen, die auf einer gedachten Montageebene 16c angeordneten bifazialen Solarmodule 12c der Solarmodulvorrichtung 10c zu tragen. Der Trägerschaft 20c, insbesondere eine Längsachse 22c des Trägerschafts 20c, ist zumindest im Wesentlichen parallel zur Montageebene 16c angeordnet. Die Solarmodulhaltevorrichtung 14c umfasst eine Reflektionseinheit 24c zu einer Reflektion von einfallendem Licht auf eine dem Trägerschaft 20c zugewandte Seite der über den Trägerschaft 20c auf der gedachten Montageebene 16c getragenen bifazialen Solarmodule 12c. Die Reflektionseinheit 24c umfasst zumindest ein Abdeckelement 44c, welches zwei Reflektionsflächen 46c aufweist und getrennt von dem Trägerschaft 20c ausgebildet ist. Das Abdeckelement 44c ist dazu vorgesehen, in einem Nahbereich des Trägerschafts 20c, insbesondere an dem Trägerschaft 20c, befestigt zu werden. Das Abdeckelement 44c ist dazu vorgesehen, in einem montierten Zustand eine Außenfläche 48c des Trägerschafts 20c (siehe Figur 9) zu verdecken.

Die in den Figuren 8 und 9 dargestellte Solarmodulhaltevorrichtung 14c weist eine zumindest im Wesentlichen analoge Ausgestaltung zu der in der Beschreibung der Figuren 1 bis 5 beschriebenen Solarmodulhaltevorrichtung 14a auf, so dass bezüglich einer Ausgestaltung der in den Figuren 8 und 9 dargestellten Solarmodulhaltevorrichtung 14c zumindest im Wesentlichen auf die Beschreibung der Figuren 1 bis 5 verwiesen werden kann. Im Unterschied zu der in der Beschreibung der Figuren 1 bis 5 beschriebenen Solarmodulhaltevorrichtung 14a umfasst die in den Figuren 8 und 9 dargestellte Solarmodulhaltevorrichtung 14c Befestigungsmittel 66c zu einer Befestigung des Abdeckelements 44c an dem Trägerschaft 20c mittels einer Klemm- und/oder Rastverbindung, wobei die Befestigungsmittel 66c jeweils dazu vorgesehen sind, den Trägerschaft 20c zur Befestigung des Abdeckelements 44c entlang der Längsachse 22c des Trägerschafts 20c betrachtet um die Längsachse 22c zumindest größtenteils zu umschließen. Die Solarmodulhaltevorrichtung 14c umfasst insbesondere genau zwei Befestigungsmittel 66c zur Befestigung des Abdeckelements 44c an dem Trägerschaft 20c. Die Befestigungsmittel 66c sind jeweils aus einem Drahtstück ausgebildet. Die Befestigungsmittel 66c sind jeweils als ein Federdraht ausgebildet. Die Befestigungsmittel 66c sind jeweils klammerförmig ausgeformt. Die Befestigungsmittel 66c sind aus einem Metall ausgebildet. Die Befestigungsmittel 66c weisen jeweils eine maximale Breite 124c von höchstens 2 cm, vorzugsweise höchstens 1 cm, bevorzugt höchstens 0,5 cm und ganz besonders bevorzugt höchstens 0,3 cm, auf. Bevorzugt weisen die jeweils als Federdraht ausgebildeten Befestigungsmittel jeweils einen maximalen Durchmesser von zumindest im Wesentlichen 0,3 cm auf. Insbesondere ist das Abdeckelement 44c, insbesondere Befestigungsbereiche des Abdeckelements 44c (vgl. 68a in Figuren 2 und 4), vorzugsweise bei einer Befestigung über die in den Figuren 8 und 9 gezeigten Befestigungsmittel 66c, frei von Ausnehmungen und/oder Durchführungen ausgebildet. Dadurch kann eine vorteilhaft einfache, schnelle und kostengünstige Herstellung des Abdeckelements 44c ermöglicht werden.

In Figur 9 ist ein Querschnitt der Solarmodulhaltevorrichtung 14c in einem Bereich des Trägerschafts 20c und des Abdeckelements 44c gezeigt. Die Befestigungsmittel 66c umgreifen das Abdeckelement 44c über eine maximale Quererstreckung 98c des Abdeckelements 44c, insbesondere die Reflektionsflächen 46c. Die Befestigungsmittel 66c erstrecken sich in einem an dem Trägerschaft 20c befestigten Zustand entlang der Längsachse 22c des Trägerschafts 20c betrachtet jeweils über einen Winkelbereich von mindestens 180°, vorzugsweise mindestens 200° und bevorzugt mindestens 220°, um die Längsachse 22c des Trägerelements 20c. Die Befestigungselemente 66c liegen jeweils an einer Außenfläche des Abdeckelements 44c, welche sich insbesondere über die Befestigungsbereiche, die Reflektionsflächen 46c und einen Zwischenbereich 92c des Abdeckelements 44c erstreckt, und, insbesondere in einem von dem Abdeckelement 44c beabstandeten Bereich, an einer Außenfläche des Trägerschafts 20c an, welche insbesondere verschieden von einer Auflagefläche 96c des Trägerschafts 20c und von der von dem Abdeckelement 44c verdeckten Außenfläche 48c des Trägerschafts 20c ausgebildet ist. Die Befestigungsmittel 66c sind jeweils dazu vorgesehen, den Trägerschaft 20c zur Klemm- und/oder Rastverbindung mit dem Trägerschaft 20c zu hintergreifen. Bevorzugt sind die Befestigungsmittel 66c formflexibel elastisch ausgebildet. Insbesondere sind die Befestigungsmittel 66c jeweils dazu vorgesehen, zur Klemm- und/oder Rastverbindung mit dem Trägerschaft 20c über ein kurzzeitiges elastisches Verbiegen zumindest teilweise um das an dem Trägerschaft 20c angeordnete Abdeckelement 44c und den Trägerschaft 20c herum bewegt zu werden. Die Befestigungsmittel 66c weisen in deren zwei Endbereichen jeweils einen nach außen, insbesondere von dem Trägerschaft 20c weg gebogenen Abschnitt auf, die insbesondere zu einer einfacheren Montage und/oder Demontage der Befestigungsmittel 66c vorgesehen sind.

Vorzugsweise begrenzt das Abdeckelement 44c Führungsvertiefungen (in Figuren nicht explizit gezeigt), welche dazu vorgesehen sind, in einem an dem Trägerschaft 20c befestigten Zustand des Abdeckelements 44c jeweils ein Befestigungsmittel 66c zumindest teilweise aufzunehmen. Bevorzugt erstrecken sich die Führungsvertiefungen jeweils zumindest im Wesentlichen senkrecht zur Längsachse 54c des Abdeckelements 44c. Durch die Führungsvertiefungen kann ein vorteilhaft sicherer Halt der Befestigungsmittel 66c gegenüber einer Bewegung parallel zur Längsachse 22c, 54c des Abdeckelements 44c und/oder des Trägerschafts 20c ermöglicht werden. Es ist denkbar, dass sich die Führungsvertiefungen jeweils über die gesamte maximale Quererstreckung 120c des Abdeckelements 44c erstrecken oder lediglich über einen Teil der maximalen Quererstreckung 120c des Abdeckelements 44c, vorzugsweise an zwei Seitenbereichen und/oder dem Zwischenbereich 78c des Abdeckelements 44c.

Alternativ ist denkbar, dass die Befestigungsmittel 66c jeweils dazu vorgesehen sind, von einer dem Abdeckelement 44c abgewandten Seite des Trägerschafts 20c an dem Trägerschaft 20c angeordnet zu werden, wobei das Abdeckelement 44c durch die Befestigungsmittel 66c insbesondere über die Befestigungsbereiche an dem Trägerschaft 20c befestigt wird (in Figuren nicht gezeigt). Vorzugsweise sind die Befestigungsmittel 66c dabei beabstandet von den Reflektionsflächen 46c und dem Zwischenbereich 92c des Abdeckelements 44c angeordnet. Insbesondere in dieser alternativen Ausgestaltung hintergreifen die Befestigungsmittel 66c den Trägerschaft 20c zur Befestigung des Abdeckelements 44c an dem Trägerschaft 20c in einem Bereich der Auflagefläche 96c zusammen mit den Befestigungsbereichen des Abdeckelements 44c.

## Patentansprüche

1. Solarmodulhaltevorrichtung zu einem Aufstellen von bifazialen Solarmodulen (12a; 12b; 12c), mit zumindest einer Trägereinheit (18a; 18b; 18c), wobei die Trägereinheit (18a; 18b; 18c) zumindest einen Trägerschaft (20a; 20b; 20c) umfasst, der zumindest ein auf einer gedachten Montageebene (16a; 16b; 16c) angeordnetes bifaziales Solarmodul (12a; 12b; 12c) trägt,
wobei der Trägerschaft (20a; 20b; 20c) zumindest im Wesentlichen parallel zur Montageebene (16a; 16b; 16c) angeordnet ist, und mit zumindest einer Reflektionseinheit (24a; 24b; 24c) zu einer Reflektion von einfallendem Licht auf eine dem Trägerschaft (20a; 20b; 20c) zugewandte Seite eines über den Trägerschaft (20a; 20b; 20c) auf der gedachten Montageebene (16a; 16b; 16c) getragenen bifazialen Solarmoduls (12a; 12b; 12c), wobei die Reflektionseinheit (24a; 24b; 24c) zumindest ein Abdeckelement (44a; 44b; 44c) umfasst, welches zumindest eine Reflektionsfläche (46a; 46b; 46c) aufweist und getrennt von dem Trägerschaft (20a; 20b; 20c) ausgebildet ist, wobei das Abdeckelement (44a; 44b; 44c) in einem Nahbereich des Trägerschafts (20a; 20b; 20c) befestigt ist,
wobei das Abdeckelement (44a; 44b; 44c) in zumindest einem montierten Zustand des Abdeckelements (44a; 44b; 44c) zumindest eine Außenfläche (48a; 48b; 48c) des Trägerschafts (20a; 20b; 20c) verdeckt **dadurch gekennzeichnet, dass** das Abdeckelement (44a; 44b; 44c) in dem montierten Zustand zusammen mit dem Trägerschaft (20a; 20b; 20c) zumindest eine Durchführung (50a; 50b; 50c) begrenzt,
wobei das Abdeckelement (44a; 44b; 44c) an dem Trägerschaft (20a; 20b; 20c) verlaufende Kabel (58a; 58b; 58c), welche insbesondere zu einem Anschluss von zumindest einem bifazialen Solarmodul (12a; 12b; 12c) vorgesehen sind, über die Durchführung (50a; 50b; 50c) aufnimmt.

2. Solarmodulhaltevorrichtung nach Anspruch 1, **dadurch gekennzeichnet, dass** das Abdeckelement (44a; 44b; 44c) in dem montierten Zustand zumindest teilweise flächig an dem Trägerschaft (20a; 20b; 20c) angelegt wird.

3. Solarmodulhaltevorrichtung nach Anspruch 1, **dadurch gekennzeichnet, dass** die Reflektionseinheit (24a; 24b; 24c), insbesondere das Abdeckelement (44a; 44b; 44c), und/oder der Trägerschaft (20a; 20b; 20c) zumindest ein Haltemittel (88a) aufweist/aufweisen, welches Kabel (58a; 58b; 58c) innerhalb der Durchführung (50a; 50b; 50c) fixiert.

4. Solarmodulhaltevorrichtung nach einem der vorhergehenden Ansprüche, **dadurch gekennzeichnet, dass** das Abdeckelement (44a; 44b; 44c) an zumindest einem entlang einer maximalen Längserstreckung (56a; 56b; 56c) des Abdeckelements (44a; 44b; 44c) ausgebildeten Ende (60a; 62a) des Abdeckelements (44a; 44b; 44c) zumindest eine abgerundete und/oder umgebogene Kante (64a; 64b; 64c) aufweist.

5. Solarmodulhaltevorrichtung nach einem der vorhergehenden Ansprüche, **dadurch gekennzeichnet, dass** die Trägereinheit (18a; 18b; 18c) zumindest zwei Befestigungselemente (42a; 42b; 42c) zu einem Befestigen zumindest eines bifazialen Solarmoduls (12a; 12b; 12c) an dem Trägerschaft (20a; 20b; 20c) umfasst, wobei die zwei Befestigungselemente (42a; 42b; 42c) entlang des Trägerschafts (20a; 20b; 20c) beabstandet voneinander angeordnet werden und gemeinsam zumindest ein bifaziales Solarmodul (12a; 12b; 12c) an dem Trägerschaft (20a; 20b; 20c) befestigen, wobei das Abdeckelement (44a; 44b; 44c) eine maximale Längserstreckung (56a; 56b; 56c) aufweist, welche mindestens 50 % eines minimalen Abstands (86a; 86b; 86c) der zwei Befestigungselemente (42a; 42b; 42c) entspricht.

6. Solarmodulhaltevorrichtung nach einem der vorhergehenden Ansprüche, **dadurch gekennzeichnet, dass** das Abdeckelement (44a; 44b; 44c) zumindest zwei Reflektionsflächen (46a; 46b; 46c) aufweist, wobei Haupterstreckungsebenen der zwei Reflektionsflächen (46a; 46b; 46c) in einem Winkel (90a; 90c) von mindestens 45° zueinander angeordnet sind.

7. Solarmodulhaltevorrichtung nach einem der vorhergehenden Ansprüche, **dadurch gekennzeichnet, dass** das Abdeckelement (44a; 44b; 44c) zumindest zwei zumindest im Wesentlichen ebene Reflektionsflächen (46a; 46b; 46c) aufweist, welche geneigt zueinander angeordnet sind.

8. Solarmodulhaltevorrichtung nach einem der vorhergehenden Ansprüche, **dadurch gekennzeichnet, dass** sich das Abdeckelement (44a; 44b; 44c) in dem montierten Zustand entlang einer Haupterstreckungsachse (94a; 94b; 94c) des Trägerschafts (20a; 20b; 20c) betrachtet um mindestens 40° um die Haupterstreckungsachse (94a; 94b; 94c) des Trägerschafts (20a; 20b; 20c) erstreckt.

9. Solarmodulhaltevorrichtung nach einem der vorhergehenden Ansprüche, **gekennzeichnet durch** zumindest ein Befestigungsmittel (66b; 66c) zu einer Befestigung des Abdeckelements (44b; 44c) an dem Trägerschaft (20b; 20c), wobei das zumindest eine Befestigungsmittel (66b; 66c) zu einer Rastverbindung vorgesehen ist.

10. Solarmodulhaltevorrichtung nach einem der Ansprüche 1 und 3, **gekennzeichnet durch** zumindest ein Befestigungsmittel (66a; 66b; 66c) zu einer Befestigung des Abdeckelements (44a; 44b; 44c) an dem Trägerschaft (20a; 20b; 20c), wobei das zumindest eine Befestigungsmittel (66a; 66b; 66c) zu einem Befestigen des Abdeckelements (44a; 44b; 44c) am Trägerschaft (20a; 20b; 20c) außerhalb der Durchführung (50a; 50b; 50c) angeordnet wird.

11. Solarmodulhaltevorrichtung nach einem der vorhergehenden Ansprüche, **gekennzeichnet durch** zumindest ein Befestigungsmittel (66c) zu einer Befestigung des Abdeckelements (44c) an dem Trägerschaft (20c) mittels einer Klemm- und/oder Rastverbindung, wobei das Befestigungsmittel (66c) den Trägerschaft (20c) zur Befestigung des Abdeckelements (44c) entlang einer Längsachse (22c) des Trägerschafts (20c) betrachtet um die Längsachse (22c) zumindest größtenteils umschließt.

12. Solarmodulhaltevorrichtung nach einem der vorhergehenden Ansprüche, **gekennzeichnet durch** zumindest ein Befestigungsmittel (66c) zu einer Befestigung des Abdeckelements (44c) an dem Trägerschaft (20c) mittels einer Klemm- und/oder Rastverbindung, wobei das Befestigungsmittel (66c) das Abdeckelement (44c) über eine maximale Quererstreckung des Abdeckelements (44c), insbesondere die Reflektionsfläche (46c), umgreift.

13. Solarmodulhaltevorrichtung nach einem der vorhergehenden Ansprüche, **dadurch gekennzeichnet, dass** das Abdeckelement (44a; 44b; 44c) aus einem einzelnen Blechteil ausgeformt ist.

14. Solarmodulhaltevorrichtung nach einem der vorhergehenden Ansprüche, **dadurch gekennzeichnet, dass** die Reflektionsfläche (46a; 46b; 46c) poliert ausgebildet ist.

15. Solarmodulhaltevorrichtung nach einem der vorhergehenden Ansprüche, **dadurch gekennzeichnet, dass** das Abdeckelement (44a; 44b; 44c) an der Reflektionsfläche (46a; 46b; 46c) zumindest eine Reflektionsbeschichtung aufweist.

16. Abdeckelement für eine Solarmodulhaltevorrichtung (14a; 14b; 14c) nach einem der vorhergehenden Ansprüche.

17. Solarmodulvorrichtung mit zumindest einem bifazialen Solarmodul (12a; 12b; 12c), insbesondere einer Mehrzahl von bifazialen Solarmodulen (12a; 12b; 12c), und mit zumindest einer Solarmodulhaltevorrichtung (14a; 14b; 14c) nach einem der Ansprüche 1 bis 15.

18. Verfahren zur Herstellung eines Abdeckelements (44a; 44b; 44c) nach Anspruch 16.

## Claims

1. Solar module holding device for an installation of bifacial solar modules (12a; 12b; 12c),
with at least one carrier unit (18a; 18b; 18c), the carrier unit (18a; 18b; 18c) comprising at least one carrier shaft (20a; 20b; 20c) carrying at least one bifacial solar module (12a; 12b; 12c) that is arranged on an imaginary mounting plane (16a; 16b; 16c), wherein the carrier shaft (20a; 20b; 20c) is arranged at least substantially parallel to the mounting plane (16a; 16b; 16c),
and with at least one reflection unit (24a; 24b; 24c) for reflecting incident light onto a side, facing towards the carrier shaft (20a; 20b; 20c), of a bifacial solar module (12a; 12b; 12c) that is supported on the imaginary mounting plane (16a; 16b; 16c) by the carrier shaft (20a; 20b; 20c), the reflection unit (24a; 24b; 24c) comprising at least one cover element (44a; 44b; 44c) which has at least one reflection surface (46a; 46b; 46c) and is realized separately from the carrier shaft (20a; 20b; 20c), wherein the cover element (44a; 44b; 44c) is fastened in a proximity of the carrier shaft (20a; 20b; 20c), wherein in at least one mounted state of the cover element (44a; 44b; 44c) the cover element (44a; 44b; 44c) covers at least an outer surface (48a; 48b; 48c) of the carrier shaft (20a; 20b; 20c),
**characterized in that** the cover element (44a; 44b; 44c) delimits in the mounted state at least one passage (50a; 50b; 50c) together with the carrier shaft (20a; 20b; 20c),
wherein the cover element (44a; 44b; 44c) at least partially accommodates via the passage (50a; 50b; 50c) cables (58a; 58b; 58c) which extend on the carrier shaft (20a; 20b; 20c) and which are in particular configured for a connection of at least one bifacial solar module (12a; 12b; 12c).

2. Solar module holding device according to claim 1,
**characterized in that** in the mounted state, the cover element (44a; 44b; 44c) is placed at least partially flat against the carrier shaft (20a; 20b; 20c).

3. Solar module holding device according to claim 1,
**characterized in that** the reflection unit (24a; 24b; 24c), in particular the cover element (44a; 44b; 44c), and/or the carrier shaft (20a; 20b; 20c) comprise/comprises at least one holding means (88a) which fixes cables (58a; 58b; 58c) within the passage (50a; 50b; 50c).

4. Solar module holding device according to one of the preceding claims, **characterized in that** the cover element (44a; 44b; 44c) comprises at least one rounded and/or bent edge (64a; 64b; 64c) on at least one end (60a; 62a) of the cover element (44a; 44b; 44c) that is formed along a maximum longitudinal extent (56a; 56b; 56c) of the cover element (44a; 44b; 44c).

5. Solar module holding device according to one of the preceding claims, **characterized in that** the carrier unit (18a; 18b; 18c) comprises at least two fastening elements (42a; 42b; 42c) for fastening at least one bifacial solar module (12a; 12b; 12c) to the carrier shaft (20a; 20b; 20c),
wherein the two fastening elements (42a; 42b; 42c) are arranged spaced apart from one another along the carrier shaft (20a; 20b; 20c) and jointly fasten at least one bifacial solar module (12a; 12b; 12c) to the carrier shaft (20a; 20b; 20c), wherein the cover element (44a; 44b; 44c) has a maximum longitudinal extent (56a; 56b; 56c) corresponding to at least 50% of a minimum distance (86a; 86b; 86c) of the two fastening elements (42a; 42b; 42c).

6. Solar module holding device according to one of the preceding claims, **characterized in that** the cover element (44a; 44b; 44c) comprises at least two reflection surfaces (46a; 46b; 46c), wherein main extension planes of the two reflection surfaces (46a; 46b; 46c) are arranged at an angle (90a; 90c) of at least 45° with respect to one another.

7. Solar module holding device according to one of the preceding claims, **characterized in that** the cover element (44a; 44b; 44c) comprises at least two at least substantially planar reflection surfaces (46a; 46b; 46c), which are arranged at an inclination with respect to one another.

8. Solar module holding device according to one of the preceding claims, **characterized in that** in the mounted state the cover element (44a; 44b; 44c) extends, viewed along a main extension axis (94a; 94b; 94c) of the carrier shaft (20a; 20b; 20c), by at least 40° around the main extension axis (94a; 94b; 94c) of the carrier shaft (20a; 20b; 20c).

9. Solar module holding device according to one of the preceding claims, **characterized by** at least one fastening means (66b; 66c) for fastening the cover element (44b; 44c) to the carrier shaft (20b; 20c), wherein the at least one fastening means (66b; 66c) is configured for a latching connection.

10. Solar module holding device according to one of claims 1 and 3, **characterized by** at least one fastening means (66a; 66b; 66c) for fastening the cover element (44a; 44b; 44c) to the carrier shaft (20a; 20b; 20c), wherein for the purpose of fastening the cover element (44a; 44b; 44c) to the carrier shaft (20a; 20b; 20c), the at least one fastening means (66a; 66b; 66c) is arranged outside the passage (50a; 50b; 50c).

11. Solar module holding device according to one of the preceding claims, **characterized by** at least one fastening means (66c) for fastening the cover element (44c) to the carrier shaft (20c) via a clamping and/or latching connection, wherein for the purpose of fastening the cover element (44c), viewed along a longitudinal axis (22c) of the carrier shaft (20c), the fastening means (66c) at least largely encompasses the carrier shaft (20c) around the longitudinal axis (22c).

12. Solar module holding device according to one of the preceding claims, **characterized by** at least one fastening means (66c) for fastening the cover element (44c) to the carrier shaft (20c) via a clamping and/or latching connection, wherein the fastening means (66c) engages around the cover element (44c) over a maximum transverse extent of the cover element (44c), in particular the reflection surface (46c).

13. Solar module holding device according to one of the preceding claims, **characterized in that** the cover element (44a; 44b; 44c) is formed from a single piece of sheet-metal.

14. Solar module holding device according to one of the preceding claims, **characterized in that** the reflection surface (46a; 46b; 46c) is realized in polished fashion.

15. Solar module holding device according to one of the preceding claims, **characterized in that** the cover element (44a; 44b; 44c) has at least one reflection coating on the reflection surface (46a; 46b; 46c).

16. Cover element for a solar module holding device (14a; 14b; 14c) according to one of the preceding claims.

17. Solar module device with at least one bifacial solar module (12a; 12b; 12c), in particular a plurality of bifacial solar modules (12a; 12b; 12c),
and with at least one solar module holding device (14a; 14b; 14c) according to one of claims 1 to 15.

18. Method for producing a cover element (44a; 44b; 44c) according to claim 16.

## Revendications

1. Dispositif de maintien de module solaire pour montage de modules solaires bifaciaux (12a ; 12b ; 12c),
avec au moins une unité de support (18a ; 18b ; 18c), l'unité de support (18a ; 18b ; 18c) comprenant au moins une tige de support (20a ; 20b ; 20c) supportant au moins un module solaire bifacial (12a ; 12b ; 12c) qui est disposé sur un plan de montage imaginaire (16a ; 16b ; 16c), la tige de support (20a ; 20b ; 20c) étant disposée au moins sensiblement en parallèle au plan de montage (16a ; 16b ; 16c), et
avec au moins une unité de réflexion (24a ; 24b ; 24c) pour réflexion de lumière incidente sur un côté, tourné vers la tige de support (20a ; 20b ; 20c), d'un module solaire bifacial (12a ; 12b ; 12c) qui est supporté par le biais de la tige de support (20a ; 20b ; 20c) sur le plan de montage imaginaire (16a ; 16b ; 16c),
où l'unité de réflexion (24a ; 24b ; 24c) comprend au moins un élément recouvrant (44a ; 44b ; 44c) qui a au moins une surface de réflexion (46a ; 46b ; 46c) et qui est réalisé séparément de la tige de support (20a ; 20b ; 20c),
où l'élément recouvrant (44a ; 44b ; 44c) est fixé dans une proximité de la tige de support (20a ; 20b ; 20c), où en au moins un état monté de l'élément recouvrant (44a ; 44b ; 44c), l'élément recouvrant (44a ; 44b ; 44c) couvre au moins une surface extérieure (48a ; 48b ; 48c) de la tige de support (20a ; 20b ; 20c), **caractérisé en ce qu'en** état monté l'élément recouvrant (44a ; 44b ; 44c) délimite- conjointement avec la tige de support (20a ; 20b ; 20c) - au moins un passage (50a ; 50b ; 50c),
où l'élément de recouvrement (44a ; 44b ; 44c) reçoit, par le biais du passage (50a ; 50b ; 50c), au moins partiellement des câbles (58a ; 58b ; 58c), qui s'étendent sur la tige de support (20a ; 20b ; 20c) et qui sont prévus en particulier pour un raccordement d'au moins un module solaire bifacial (12a ; 12b ; 12c).

2. Dispositif de maintien de module solaire selon la revendication 1, **caractérisé en ce qu'**en état monté, l'élément recouvrant (44a ; 44b ; 44c) est appliqué au moins partiellement à plat sur la tige de support (20a ; 20b ; 20c).

3. Dispositif de maintien de module solaire selon la revendication 1, **caractérisé en ce que** l'unité de réflexion (24a ; 24b ; 24c), en particulier l'élément recouvrant (44a ; 44b ; 44c), et/ou la tige de support (20a ; 20b ; 20c) comprennent/comprend au moins un moyen de maintien (88a) qui fixe des câbles (58a ; 58b ; 58c) à l'intérieur du passage (50a ; 50b ; 50c).

4. Dispositif de maintien de module solaire selon l'une quelconque des revendications précédentes,
**caractérisé en ce que** l'élément recouvrant (44a ; 44b ; 44c) comprend, à au moins une extrémité (60a ; 62a) de l'élément recouvrant (44a ; 44b ; 44c) formée le long d'une étendue longitudinale maximale (56a ; 56b ; 56c) de l'élément recouvrant (44a ; 44b ; 44c), au moins une arête (64a ; 64b ; 64c) arrondie et/ou recourbée.

5. Dispositif de maintien de module solaire selon l'une quelconque des revendications précédentes,
**caractérisé en ce que** l'unité de support (18a ; 18b ; 18c) comprend au moins deux éléments de fixation (42a ; 42b ; 42c) pour fixer au moins un module solaire bifacial (12a ; 12b ; 12c) sur la tige de support (20a ; 20b ; 20c),
où les deux éléments de fixation (42a ; 42b ; 42c) sont disposés l'un à l'écart de l'autre le long de la tige de support (20a ; 20b ; 20c) et fixent conjointement au moins un module solaire bifacial (12a ; 12b ; 12c) sur la tige de support (20a ; 20b ; 20c),
où l'élément recouvrant (44a ; 44b ; 44c) présente une étendue longitudinale maximale (56a ; 56b ; 56c) qui correspond à au moins 50 % d'une distance minimale (86a ; 86b ; 86c) des deux éléments de fixation (42a ; 42b ; 42c).

6. Dispositif de maintien de module solaire selon l'une quelconque des revendications précédentes,
**caractérisé en ce que** l'élément recouvrant (44a ; 44b ; 44c) comprend au moins deux surfaces réfléchissantes (46a ; 46b ; 46c),
où des plans d'étendue principaux des deux surfaces réfléchissantes (46a ; 46b ; 46c) sont disposés à un angle (90a ; 90c) d'au moins 45° l'un par rapport à l'autre.

7. Dispositif de maintien de module solaire selon l'une quelconque des revendications précédentes,
**caractérisé en ce que** l'élément recouvrant (44a ; 44b ; 44c) comprend au moins deux surfaces réfléchissantes (46a ; 46b ; 46c) au moins sensiblement planes qui sont disposées inclinées l'une par rapport à l'autre.

8. Dispositif de maintien de module solaire selon l'une quelconque des revendications précédentes,
**caractérisé en ce qu'**en état monté, vu le long d'un axe d'étendue principal (94a ; 94b ; 94c) de la tige de support (20a ; 20b ; 20c), l'élément recouvrant (44a ; 44b ; 44c), s'étend par au moins 40° autour de l'axe d'étendue principal (94a ; 94b ; 94c) de la tige de support (20a ; 20b ; 20c).

9. Dispositif de maintien de module solaire selon l'une quelconque des revendications précédentes,
**caractérisé par au** moins un moyen de fixation (66b ; 66c) pour fixer l'élément recouvrant (44b ; 44c) sur la tige de support (20b ; 20c), où l'au moins un moyen de fixation (66b ; 66c) est conçu pour une liaison par encliquetage.

10. Dispositif de maintien de module solaire selon l'une des revendications 1 et 3, **caractérisé par** au moins un moyen de fixation (66a ; 66b ; 66c) pour fixer l'élément recouvrant (44a ; 44b ; 44c) sur la tige de support (20a ; 20b ; 20c),
où pour la fixation de l'élément recouvrant (44a ; 44b ; 44c) sur la tige de support (20a ; 20b ; 20c), l'au moins un moyen de fixation (66a ; 66b ; 66c) est disposé à l'extérieur du passage (50a ; 50b ; 50c).

11. Dispositif de maintien de module solaire selon l'une quelconque des revendications précédentes,
**caractérisé par** au moins un moyen de fixation (66c) pour fixer l'élément recouvrant (44c) sur la tige de support (20c) moyennant une liaison par serrage et/ou par encliquetage,
où vu le long d'un axe longitudinal (22c) de la tige de support (20c), pour la fixation de l'élément recouvrant (44c), le moyen de fixation (66c) entoure au moins en grande partie la tige de support (20c) autour de l'axe longitudinal (22c).

12. Dispositif de maintien de module solaire selon l'une quelconque des revendications précédentes,
**caractérisé par** au moins un moyen de fixation (66c) pour fixer l'élément recouvrant (44c) sur la tige de support (20c) moyennant une liaison par serrage et/ou par encliquetage,
où le moyen de fixation (66c) entoure l'élément recouvrant (44c) sur une étendue transversale maximale de l'élément recouvrant (44c), en particulier sur la surface réfléchissante (46c).

13. Dispositif de maintien de module solaire selon l'une quelconque des revendications précédentes,
**caractérisé en ce que** l'élément recouvrant (44a ; 44b ; 44c) est formé à partir d'une seule pièce en tôle.

14. Dispositif de maintien de module solaire selon l'une quelconque des revendications précédentes,
**caractérisé en ce que** la surface réfléchissante (46a ; 46b ; 46c) est réalisée de manière polie.

15. Dispositif de maintien de module solaire selon l'une quelconque des revendications précédentes,
**caractérisé en ce que** l'élément recouvrant (44a ; 44b ; 44c) comprend au moins un revêtement réfléchissant sur la surface réfléchissante (46a ; 46b ; 46c).

16. Élément recouvrant pour un dispositif de maintien de module solaire (14a ; 14b ; 14c) selon l'une quelconque des revendications précédentes.

17. Dispositif de module solaire avec au moins un module solaire bifacial (12a ; 12b ; 12c), en particulier une pluralité de modules solaires bifaciaux (12a ; 12b ; 12c), et avec au moins un dispositif de maintien de module solaire (14a ; 14b ; 14c) selon l'une des revendications 1 à 15.

18. Procédé de fabrication d'un élément recouvrant (44a ; 44b ; 44c) selon la revendication 16.
